# EUROPEAN PATENT SPECIFICATION

(11) **EP 4 184 085 B1**
(45) Date of publication and mention of the grant of the patent: **31.12.2025**
(21) Application number: 21847159.7
(22) Date of filing: 22.07.2021
(51) Int. Cl.: F25B 41/00, B60K 11/02, B60H 1/00, B60L 58/26, B60L 58/27, B60H 1/32, B60K 1/00

(54) **VALVE BLOCK DEVICE, CONTROL METHOD, VEHICLE COOLING SYSTEM AND VEHICLE**
VENTILBLOCKVORRICHTUNG, STEUERUNGSVERFAHREN, FAHRZEUGKÜHLSYSTEM UND FAHRZEUG
DISPOSITIF DE BLOCS DE SOUPAPES, PROCÉDÉ DE COMMANDE, SYSTÈME DE REFROIDISSEMENT DE VÉHICULE, ET VÉHICULE

(30) Priority: 23.07.2020 CN 202010718784
(43) Date of publication of application: 24.05.2023
(73) Proprietor: Huawei Digital Power Technologies Co., Ltd., Shenzhen, Guangdong 518043 (CN)
(72) Inventor: LIU, Chaopeng, Shenzhen, Guangdong 518129 (CN); CHEN, Jun, Shenzhen, Guangdong 518129 (CN)
(74) Representative: Maiwald GmbH
(86) International application number: PCT/CN2021/107805
(87) International publication number: WO 2022/017443

(56) References cited:
- EP-B1- 2 245 389
- CN-A- 108 711 659
- CN-A- 109 895 599
- CN-A- 110 345 656
- CN-A- 110 774 863
- CN-A- 112 026 474
- CN-U- 208 896 808
- DE-A1- 102016 000 316
- DE-A1- 102018 106 298
- JP-A- 2009 154 862
- JP-A- 2014 218 211
- US-A1- 2002 035 843
- US-B2- 10 703 172

## Description

This application claims priority to Chinese Patent Application No. 202010718784.7, filed with the China National Intellectual Property Administration on July 23, 2020 and entitled "VALVE ASSEMBLY APPARATUS, CONTROL METHOD, VEHICLE COOLING SYSTEM, AND VEHICLE".

### TECHNICAL FIELD

This invention relates to the field of vehicles, and in particular, to a valve assembly apparatus, a control method, a vehicle cooling system, and a vehicle.

### BACKGROUND

US10703172B2 describes that a vehicular heat management system has a first valve body, a second valve body, a third valve body, and a fourth valve body. It is described that the first valve body switches a state that the heating medium discharged from the first pump flows in and a state that the heating medium discharged from the first pump does not flow in, with respect to the more than or equal to three of heating medium passing device. It is described that the second valve body switches a state that the heating medium discharged from the second pump flows in and a state that the heating medium discharged from the second pump does not flow in, with respect to the more than or equal to three of heating medium passing device. It is described that the third valve body switches a state that the heating medium flows to the first pump and a state that the heating medium does not flow to the first pump, with respect to the more than or equal to three of heating medium passing device. It is described that the fourth valve body switches a state that the heating medium flows to the second pump and a state that the heating medium does not flow to the second pump, with respect to the more than or equal to three of heating medium passing device.

In a conventional vehicle cooling system for a vehicle, heat exchange is performed with a component of the vehicle by using an efficient heat pump technology. A working principle of the heat pump technology is similar to a working principle of compressor refrigeration and is as follows: Low-temperature and low-pressure liquid refrigerant (for example, Freon) absorbs heat from a high-temperature heat source (for example, a powertrain or a battery pack assembly), and is evaporated into low-pressure gaseous refrigerant in an evaporator. The gaseous refrigerant is then compressed into high-temperature and high-pressure gaseous refrigerant in a compressor, and the gaseous refrigerant releases heat to a low-temperature heat source (for example, a passenger cabin), and then is condensed into high-pressure liquid refrigerant in a condenser. The liquid refrigerant is then throttled into low-temperature and low-pressure liquid refrigerant by using a throttling element (for example, a capillary, a thermal expansion valve, or an electronic expansion valve), and flows back to the evaporator.

It may be learned that in the heat pump technology, the passenger cabin can be heated, and the powertrain can be cooled. However, in the existing heat pump technology, the refrigerant is delivered to the powertrain and the passenger cabin through a pipe, and the refrigerant needs to flow in the pipe. Therefore, a large amount of refrigerant needs to be used. However, low-flammable refrigerant with a very high unit price is required for use in the vehicle. In addition, a high pressure-resistant stop valve is further added at a position of connection between a main pipe and each branch pipe, to control flow of the refrigerant. In this case, there is an increase in costs.

### SUMMARY

Embodiments of this invention provide a valve assembly apparatus, a control method, a vehicle cooling system, and a vehicle, to reduce costs of performing cooling or heating in a vehicle by using a heat pump.

To achieve the foregoing objective, the following technical solutions are used in embodiments of this invention.

The invention and its scope of protection is defined by the independent claims. Embodiments of the invention are defined by the dependent claims. The following aspects and implementations of the summary provide examples of combinations of technical subject matters.

According to a first aspect, a valve assembly apparatus is according to claim 1 is provided.

In the valve assembly apparatus provided in this embodiment of this application, a full indirect cooling technology is used, a cooling capacity of the evaporator and a heating capacity of the condenser in the heat pump subsystem are conducted to a thermal management component terminal subsystem such as the powertrain, the passenger cabin, or the front end heat exchanger, and refrigerant does not need to be delivered to the thermal management component terminal subsystem, to ensure that the refrigerant and the passenger cabin are physically isolated, simplify a structure of the heat pump subsystem, reduce a quantity of high-pressure stop valves, and reduce refrigerant charge of the heat pump subsystem. Therefore, costs of performing cooling or heating in a vehicle by using a heat pump can be greatly reduced.

In a possible implementation, the valve assembly apparatus further includes a battery pack temperature compensation pump, and the outlet in the battery pack inlet and outlet is further connected to the inlet in the battery pack inlet and outlet by using the battery pack temperature compensation pump. Another possible structure of the valve assembly apparatus is disclosed in this implementation.

In a possible implementation, the controller is configured to: when the working condition of the vehicle cooling system includes cooling the battery pack assembly, control the actuator to communicate the inlet in the first coolant inlet and outlet with the outlet in the battery pack inlet and outlet, and communicate the outlet in the first coolant inlet and outlet with the inlet in the battery pack inlet and outlet. During cooling of the battery pack assembly, low-temperature coolant from the evaporator in the heat pump subsystem flows to the heat exchanger of the battery pack assembly, to cool the battery pack assembly.

In a possible implementation, the controller is configured to: when the working condition of the vehicle cooling system includes heating the battery pack assembly, control the actuator to communicate the inlet in the second coolant inlet and outlet with the outlet in the battery pack inlet and outlet, and communicate the outlet in the second coolant inlet and outlet with the inlet in the battery pack inlet and outlet. During heating of the battery pack assembly, high-temperature coolant from the condenser in the heat pump subsystem flows to the heat exchanger of the battery pack assembly, to heat the battery pack assembly.

In a possible implementation, the controller is configured to control the actuator to communicate the outlet in the battery pack inlet and outlet with the inlet in the battery pack inlet and outlet. Coolant that flows out from a heat exchanger of a battery pack and coolant that flows to the battery pack are mixed to increase a temperature of the coolant that flows to the battery pack, so that the battery pack works at an optimal working temperature, to avoid a case in which output power is reduced due to an excessively low temperature of the battery pack.

In a possible implementation, the controller is configured to: when the working condition of the vehicle cooling system includes cooling the powertrain, control the actuator to communicate the inlet in the first coolant inlet and outlet with the outlet in the powertrain inlet and outlet, and communicate the outlet in the first coolant inlet and outlet with the inlet in the powertrain inlet and outlet. During cooling of the powertrain, low-temperature coolant from the evaporator in the heat pump subsystem flows to the heat exchanger of the powertrain, to cool the powertrain.

In a possible implementation, the controller is configured to: when the working condition of the vehicle cooling system includes cooling the powertrain, control the actuator to communicate the inlet in the first coolant inlet and outlet with the outlet in the front end inlet and outlet, communicate the inlet in the front end inlet and outlet with the outlet in the powertrain inlet and outlet, and communicate the inlet in the powertrain inlet and outlet with the outlet in the first coolant inlet and outlet. During heating of the powertrain, high-temperature coolant from the condenser in the heat pump subsystem flows to the heat exchanger of the powertrain, to heat the powertrain.

In a possible implementation, the controller is configured to: when the working condition of the vehicle cooling system includes cooling the powertrain, control the actuator to communicate the inlet in the first coolant inlet and outlet with the outlet in the powertrain inlet and outlet, communicate the inlet in the powertrain inlet and outlet with the outlet in the front end inlet and outlet, and communicate the inlet in the front end inlet and outlet with the outlet in the first coolant inlet and outlet. During cooling of the powertrain, low-temperature coolant from the evaporator in the heat pump subsystem flows to the heat exchanger of the powertrain, to cool the powertrain. In addition, before the coolant absorbs heat generated by the powertrain, heat exchange is performed with ambient air by using the front end heat exchanger, to increase a temperature of the coolant, so as to increase an evaporating temperature of refrigerant in the evaporator. Therefore, energy consumption for heating is reduced, and endurance mileage is increased.

In a possible implementation, the controller is configured to: when the working condition of the vehicle cooling system includes performing natural heat dissipation on the powertrain, control the actuator to communicate the inlet in the second coolant inlet and outlet, the inlet in the powertrain inlet and outlet, and the outlet in the front end inlet and outlet, and communicate the outlet in the second coolant inlet and outlet, the outlet in the powertrain inlet and outlet, and the inlet in the front end inlet and outlet. Natural heat dissipation is performed on the powertrain, and cooling of the powertrain is omitted. Therefore, a rotational speed of a compressor can be reduced, and an evaporating temperature of refrigerant in the evaporator can be increased. Therefore, energy consumption for cooling is reduced, and endurance mileage is increased.

In a possible implementation, the controller is configured to: when the working condition of the vehicle cooling system includes performing natural heat dissipation on the battery pack assembly and the powertrain, control the actuator to communicate the inlet in the first coolant inlet and outlet with the outlet in the powertrain inlet and outlet, communicate the inlet in the powertrain inlet and outlet with the outlet in the front end inlet and outlet, communicate the inlet in the front end inlet and outlet with the outlet in the second coolant inlet and outlet, communicate the inlet in the second coolant inlet and outlet with the outlet in the battery pack inlet and outlet, and communicate the inlet in the battery pack inlet and outlet with the outlet in the first coolant inlet and outlet. Heat generated by the battery pack assembly and heat generated by the powertrain are brought to the front end heat exchanger by using coolant, and are dissipated into air. Natural heat dissipation is performed on the battery pack assembly and the powertrain by using the front end heat exchanger, and a compressor does not need to be run. Therefore, energy consumption can be reduced, and endurance mileage can be increased.

In a possible implementation, the controller is configured to: when the working condition of the vehicle cooling system includes performing natural heat dissipation on the battery pack assembly, control the actuator to communicate the inlet in the first coolant inlet and outlet with the outlet in the front end inlet and outlet, communicate the inlet in the front end inlet and outlet with the outlet in the second coolant inlet and outlet, communicate the inlet in the second coolant inlet and outlet with the outlet in the battery pack inlet and outlet, and communicate the inlet in the battery pack inlet and outlet with the outlet in the first coolant inlet and outlet. Heat generated by the battery pack assembly is brought to the front end heat exchanger by using coolant, and is dissipated into air. Natural heat dissipation is performed on the battery pack assembly by using the front end heat exchanger, and a compressor does not need to be run. Therefore, energy consumption can be reduced, and endurance mileage can be increased.

In a possible implementation, the controller is configured to: when the working condition of the vehicle cooling system includes defrosting the front end heat exchanger, control the actuator to communicate the inlet in the front end inlet and outlet with the outlet in the powertrain inlet and outlet, and communicate the outlet in the front end inlet and outlet with the inlet in the powertrain inlet and outlet. When the front end heat exchanger is defrosted, the heat pump subsystem does not need to work. Therefore, energy consumption can be reduced, and endurance mileage can be increased. Defrosting is performed by using residual heat of the powertrain, and defrosting can be performed without stopping a machine. Therefore, while thermal comfort of the passenger cabin in winter is ensured, defrosting is implemented with low energy consumption.

In a possible implementation, the controller is further configured to: control the actuator to communicate the inlet in the second coolant inlet and outlet with the outlet in the front end inlet and outlet, and communicate the outlet in the second coolant inlet and outlet with the inlet in the front end inlet and outlet. Natural heat dissipation is performed on the condenser by using the front end heat exchanger, to reduce a condensing temperature of coolant in the condenser. Therefore, energy consumption for cooling is reduced, and endurance mileage is increased.

In a possible implementation, the controller is further configured to: control the actuator to communicate the inlet in the first coolant inlet and outlet with the outlet in the front end inlet and outlet, and communicate the outlet in the first coolant inlet and outlet with the inlet in the front end inlet and outlet. Before coolant absorbs heat generated by the powertrain, heat exchange is performed with ambient air by using the front end heat exchanger, to increase a temperature of the coolant, so as to increase an evaporating temperature of refrigerant in the evaporator. Therefore, energy consumption for heating is reduced, and endurance mileage is increased.

According to a second aspect, a control method according to claim 12 is provided, and is applied to the valve assembly apparatus in the first aspect.

In the control method provided in this embodiment of this application, a full indirect cooling technology is used, a cooling capacity of an evaporator and a heating capacity of a condenser in a heat pump subsystem are conducted to a thermal management component terminal subsystem such as a powertrain, a passenger cabin, or a front end heat exchanger, and refrigerant does not need to be delivered to the thermal management component terminal subsystem, to ensure that the refrigerant and the passenger cabin are physically isolated, simplify a structure of the heat pump subsystem, reduce a quantity of high-pressure stop valves, and reduce refrigerant charge of the heat pump subsystem. Therefore, costs of performing cooling or heating in a vehicle by using a heat pump can be greatly reduced.

In a possible implementation, that a controller in the valve assembly apparatus controls, based on a working condition of a vehicle cooling system, an actuator in the valve assembly apparatus to open at least one outlet and at least one inlet in an inlet and outlet set of the valve assembly apparatus includes: When the working condition of the vehicle cooling system includes cooling a passenger cabin, the controller controls the actuator to communicate an inlet in a first coolant inlet and outlet with an outlet in a passenger cabin cooling inlet and outlet, and communicate an outlet in the first coolant inlet and outlet with an inlet in the passenger cabin cooling inlet and outlet.

In a possible implementation, that a controller in the valve assembly apparatus controls, based on a working condition of a vehicle cooling system, an actuator in the valve assembly apparatus to open at least one outlet and at least one inlet in an inlet and outlet set of the valve assembly apparatus includes: When the working condition of the vehicle cooling system includes heating the passenger cabin, the controller controls the actuator to communicate an inlet in a second coolant inlet and outlet with an outlet in a passenger cabin heating inlet and outlet, and communicate an outlet in the second coolant inlet and outlet with an inlet in the passenger cabin heating inlet and outlet.

In a possible implementation, that a controller in the valve assembly apparatus controls, based on a working condition of a vehicle cooling system, an actuator in the valve assembly apparatus to open at least one outlet and at least one inlet in an inlet and outlet set of the valve assembly apparatus includes: When the working condition of the vehicle cooling system includes cooling a battery pack assembly, the controller controls the actuator to communicate the inlet in the first coolant inlet and outlet with an outlet in a battery pack inlet and outlet, and communicate the outlet in the first coolant inlet and outlet with an inlet in the battery pack inlet and outlet.

In a possible implementation, that a controller in the valve assembly apparatus controls, based on a working condition of a vehicle cooling system, an actuator in the valve assembly apparatus to open at least one outlet and at least one inlet in an inlet and outlet set of the valve assembly apparatus includes: When the working condition of the vehicle cooling system includes heating a battery pack assembly, the controller controls the actuator to communicate the inlet in the second coolant inlet and outlet with an outlet in a battery pack inlet and outlet, and communicate the outlet in the second coolant inlet and outlet with an inlet in the battery pack inlet and outlet.

In a possible implementation, the method further includes: The controller controls the actuator to communicate the outlet in the battery pack inlet and outlet with the inlet in the battery pack inlet and outlet.

In a possible implementation, that a controller in the valve assembly apparatus controls, based on a working condition of a vehicle cooling system, an actuator in the valve assembly apparatus to open at least one outlet and at least one inlet in an inlet and outlet set of the valve assembly apparatus includes: When the working condition of the vehicle cooling system includes cooling a powertrain, the controller controls the actuator to communicate the inlet in the first coolant inlet and outlet with an outlet in a powertrain inlet and outlet, and communicate the outlet in the first coolant inlet and outlet with an inlet in the powertrain inlet and outlet.

In a possible implementation, that a controller in the valve assembly apparatus controls, based on a working condition of a vehicle cooling system, an actuator in the valve assembly apparatus to open at least one outlet and at least one inlet in an inlet and outlet set of the valve assembly apparatus includes: When the working condition of the vehicle cooling system includes cooling a powertrain, the controller controls the actuator to communicate the inlet in the first coolant inlet and outlet with an outlet in a front end inlet and outlet, communicate an inlet in the front end inlet and outlet with an outlet in a powertrain inlet and outlet, and communicate an inlet in the powertrain inlet and outlet with the outlet in the first coolant inlet and outlet.

In a possible implementation, that a controller in the valve assembly apparatus controls, based on a working condition of a vehicle cooling system, an actuator in the valve assembly apparatus to open at least one outlet and at least one inlet in an inlet and outlet set of the valve assembly apparatus includes: When the working condition of the vehicle cooling system includes cooling a powertrain, the controller controls the actuator to communicate the inlet in the first coolant inlet and outlet with an outlet in a powertrain inlet and outlet, communicate an inlet in the powertrain inlet and outlet with an outlet in a front end inlet and outlet, and communicate an inlet in the front end inlet and outlet with the outlet in the first coolant inlet and outlet.

In a possible implementation, that a controller in the valve assembly apparatus controls, based on a working condition of a vehicle cooling system, an actuator in the valve assembly apparatus to open at least one outlet and at least one inlet in an inlet and outlet set of the valve assembly apparatus includes: When the working condition of the vehicle cooling system includes performing natural heat dissipation on a powertrain, the controller controls the actuator to communicate an inlet in a second coolant inlet and outlet, an inlet in a powertrain inlet and outlet, and an outlet in a front end inlet and outlet, and communicate an outlet in the second coolant inlet and outlet, an outlet in the powertrain inlet and outlet, and an inlet in the front end inlet and outlet.

In a possible implementation, that a controller in the valve assembly apparatus controls, based on a working condition of a vehicle cooling system, an actuator in the valve assembly apparatus to open at least one outlet and at least one inlet in an inlet and outlet set of the valve assembly apparatus includes: when the working condition of the vehicle cooling system includes performing natural heat dissipation on a battery pack assembly and a powertrain, controlling the actuator to communicate an inlet in a first coolant inlet and outlet with an outlet in a powertrain inlet and outlet, communicate an inlet in the powertrain inlet and outlet with an outlet in a front end inlet and outlet, communicate an inlet in the front end inlet and outlet with an outlet in a second coolant inlet and outlet, communicate an inlet in the second coolant inlet and outlet with an outlet in a battery pack inlet and outlet, and communicate an inlet in the battery pack inlet and outlet with an outlet in the first coolant inlet and outlet.

In a possible implementation, that a controller in the valve assembly apparatus controls, based on a working condition of a vehicle cooling system, an actuator in the valve assembly apparatus to open at least one outlet and at least one inlet in an inlet and outlet set of the valve assembly apparatus includes: When the working condition of the vehicle cooling system includes performing natural heat dissipation on a battery pack assembly, the controller controls the actuator to communicate an inlet in a first coolant inlet and outlet with an outlet in a front end inlet and outlet, communicate an inlet in the front end inlet and outlet with an outlet in a second coolant inlet and outlet, communicate an inlet in the second coolant inlet and outlet with an outlet in a battery pack inlet and outlet, and communicate an inlet in the battery pack inlet and outlet with an outlet in the first coolant inlet and outlet.

In a possible implementation, that a controller in the valve assembly apparatus controls, based on a working condition of a vehicle cooling system, an actuator in the valve assembly apparatus to open at least one outlet and at least one inlet in an inlet and outlet set of the valve assembly apparatus includes: When the working condition of the vehicle cooling system includes defrosting a front end heat exchanger, the controller controls the actuator to communicate an inlet in a front end inlet and outlet with an outlet in a powertrain inlet and outlet, and communicate an outlet in the front end inlet and outlet with an inlet in the powertrain inlet and outlet.

In a possible implementation, the method further includes: The controller controls the actuator to communicate an inlet in a second coolant inlet and outlet with an outlet in a front end inlet and outlet, and communicate an outlet in the second coolant inlet and outlet with an inlet in the front end inlet and outlet.

In a possible implementation, the method further includes: The controller controls the actuator to communicate the inlet in the first coolant inlet and outlet with an outlet in a front end inlet and outlet, and communicate the outlet in the first coolant inlet and outlet with an inlet in the front end inlet and outlet.

According to a third aspect, a vehicle cooling system according to claim 15 is provided, and includes a heat pump subsystem and the valve assembly apparatus according to any one of the first aspect and the implementations of the first aspect. The heat pump subsystem includes a condenser and an evaporator. The valve assembly apparatus is connected to a coolant outlet and a coolant inlet of the condenser, and the valve assembly apparatus is further connected to a coolant outlet and a coolant inlet of the evaporator.

According to a fourth aspect, a vehicle is provided, and includes the vehicle cooling system according to the third aspect.

For technical effects of any one of the second aspect and the implementations of the second aspect to the fourth aspect, refer to any one of the first aspect and the implementations of the first aspect. No repeated description is provided herein.

### BRIEF DESCRIPTION OF DRAWINGS

FIG. 1 is a schematic diagram 1 of a structure of a vehicle cooling system according to an embodiment of this application;
FIG. 2 is a schematic diagram 1 of a structure of another vehicle cooling system according to an embodiment of this application;
FIG. 3 is a schematic diagram 1 of a structure of a vehicle cooling system and a valve assembly apparatus according to an embodiment of this application;
FIG. 4 is a schematic diagram 1 of a structure of another vehicle cooling system and another valve assembly apparatus according to an embodiment of this application;
FIG. 5 is a schematic diagram 2 of a structure of a vehicle cooling system according to an embodiment of this application;
FIG. 6 is a schematic diagram 2 of a structure of another vehicle cooling system according to an embodiment of this application;
FIG. 7 is a schematic diagram 2 of a structure of a vehicle cooling system and a valve assembly apparatus according to an embodiment of this application;
FIG. 8 is a schematic diagram 2 of a structure of another vehicle cooling system and another valve assembly apparatus according to an embodiment of this application;
FIG. 9 is a schematic diagram of a flow path of coolant existing during normal running at a high temperature in summer according to an embodiment of this application;
FIG. 10 is another schematic diagram of a flow path of coolant existing during normal running at a high temperature in summer according to an embodiment of this application;
FIG. 11 is a schematic diagram of a flow path of coolant existing during normal running at an appropriate temperature in summer according to an embodiment of this application;
FIG. 12 is another schematic diagram of a flow path of coolant existing during normal running at an appropriate temperature in summer according to an embodiment of this application;
FIG. 13 is a schematic diagram of a flow path of coolant existing during violent running at a high temperature in summer according to an embodiment of this application;
FIG. 14 is another schematic diagram of a flow path of coolant existing during violent running at a high temperature in summer according to an embodiment of this application;
FIG. 15 is a schematic diagram of a flow path of coolant existing during violent running at an appropriate temperature in summer and in spring and autumn according to an embodiment of this application;
FIG. 16 is another schematic diagram of a flow path of coolant existing during violent running at an appropriate temperature in summer and in spring and autumn according to an embodiment of this application;
FIG. 17 is a schematic diagram of a flow path of coolant existing during parking and charging in summer according to an embodiment of this application;
FIG. 18 is another schematic diagram of a flow path of coolant existing during parking and charging in summer according to an embodiment of this application;
FIG. 19 is a schematic diagram of a flow path of coolant existing during normal running at an appropriate temperature in spring and autumn according to an embodiment of this application;
FIG. 20 is another schematic diagram of a flow path of coolant existing during normal running at an appropriate temperature in spring and autumn according to an embodiment of this application;
FIG. 21 is a schematic diagram of a flow path of coolant existing during parking and charging in spring and autumn according to an embodiment of this application;
FIG. 22 is another schematic diagram of a flow path of coolant existing during parking and charging in spring and autumn according to an embodiment of this application;
FIG. 23 is a schematic diagram of a flow path of coolant existing during normal running 1-1 in winter according to an embodiment of this application;
FIG. 24 is another schematic diagram of a flow path of coolant existing during normal running 1-1 in winter according to an embodiment of this application;
FIG. 25 is a schematic diagram of a flow path of coolant existing during normal running 1-2 in winter according to an embodiment of this application;
FIG. 26 is another schematic diagram of a flow path of coolant existing during normal running 1-2 in winter according to an embodiment of this application;
FIG. 27 is a schematic diagram of a flow path of coolant existing during normal running 1-3 in winter according to an embodiment of this application;
FIG. 28 is another schematic diagram of a flow path of coolant existing during normal running 1-3 in winter according to an embodiment of this application;
FIG. 29 is a schematic diagram of a flow path of coolant existing during normal running 2-1 in winter according to an embodiment of this application;
FIG. 30 is another schematic diagram of a flow path of coolant existing during normal running 2-1 in winter according to an embodiment of this application;
FIG. 31 is a schematic diagram of a flow path of coolant existing during normal running 2-2 in winter according to an embodiment of this application;
FIG. 32 is another schematic diagram of a flow path of coolant existing during normal running 2-2 in winter according to an embodiment of this application;
FIG. 33 is a schematic diagram of a flow path of coolant existing during normal running 2-3 in winter according to an embodiment of this application;
FIG. 34 is another schematic diagram of a flow path of coolant existing during normal running 2-3 in winter according to an embodiment of this application;
FIG. 35 is a schematic diagram of a flow path of coolant existing during non-cooling dehumidification 1-1 in winter according to an embodiment of this application;
FIG. 36 is another schematic diagram of a flow path of coolant existing during non-cooling dehumidification 1-1 in winter according to an embodiment of this application;
FIG. 37 is a schematic diagram of a flow path of coolant existing during non-cooling dehumidification 1-2 in winter according to an embodiment of this application;
FIG. 38 is another schematic diagram of a flow path of coolant existing during non-cooling dehumidification 1-2 in winter according to an embodiment of this application;
FIG. 39 is a schematic diagram of a flow path of coolant existing during non-cooling dehumidification 1-3 in winter according to an embodiment of this application;
FIG. 40 is another schematic diagram of a flow path of coolant existing during non-cooling dehumidification 1-3 in winter according to an embodiment of this application;
FIG. 41 is a schematic diagram of a flow path of coolant existing during non-cooling dehumidification 2-1 in winter according to an embodiment of this application;
FIG. 42 is another schematic diagram of a flow path of coolant existing during non-cooling dehumidification 2-1 in winter according to an embodiment of this application;
FIG. 43 is a schematic diagram of a flow path of coolant existing during non-cooling dehumidification 2-2 in winter according to an embodiment of this application;
FIG. 44 is another schematic diagram of a flow path of coolant existing during non-cooling dehumidification 2-2 in winter according to an embodiment of this application;
FIG. 45 is a schematic diagram of a flow path of coolant existing during non-cooling dehumidification 2-3 in winter according to an embodiment of this application;
FIG. 46 is another schematic diagram of a flow path of coolant existing during non-cooling dehumidification 2-3 in winter according to an embodiment of this application;
FIG. 47 is a schematic diagram of a flow path of coolant existing during defrosting of a front end heat exchanger in winter according to an embodiment of this application;
FIG. 48 is another schematic diagram of a flow path of coolant existing during defrosting of a front end heat exchanger in winter according to an embodiment of this application;
FIG. 49 is a schematic diagram of a flow path of coolant existing during parking and charging in winter according to an embodiment of this application; and
FIG. 50 is another schematic diagram of a flow path of coolant existing during parking and charging in winter according to an embodiment of this application.

### DESCRIPTION OF EMBODIMENTS

The term "for example" in embodiments of this application is used to represent giving an example, an illustration, or a description. Any embodiment or design scheme described as an "example" in this application should not be explained as being more preferred or having more advantages than another embodiment or design scheme. Exactly, the word "example" is used to present a concept in a specific manner.

Embodiments of this application provide a vehicle and a vehicle cooling system installed in the vehicle. The vehicle may be a fuel vehicle, a gas vehicle, an electric vehicle, or the like. This is not limited.

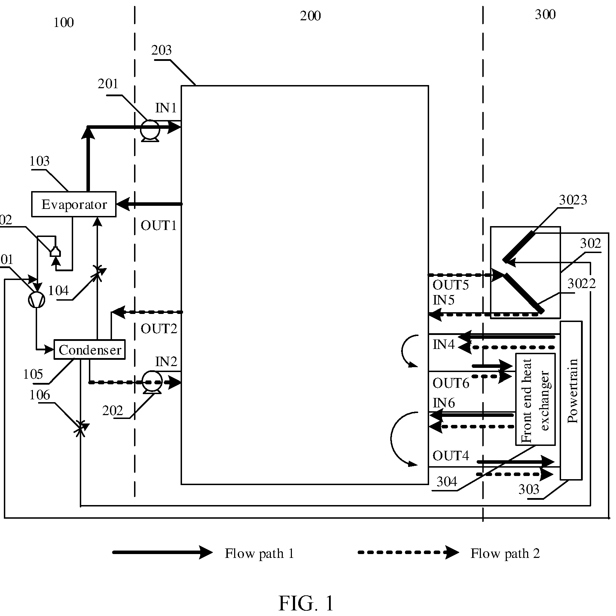

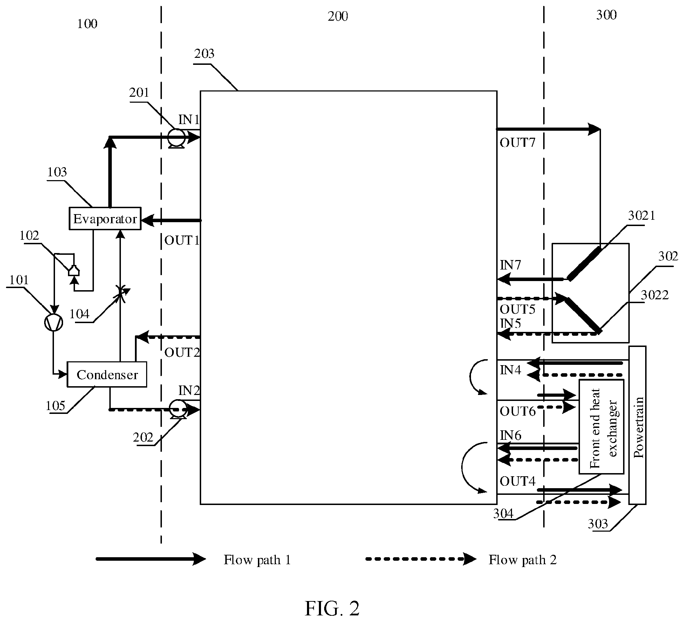

As shown in FIG. 1 and FIG. 2, the vehicle cooling system includes a heat pump subsystem 100, a flow path control subsystem 200, and a thermal management component terminal subsystem 300.

The heat pump subsystem 100 includes but is not limited to a compressor 101, a liquid storage tank 102, an evaporator 103, a first throttling element 104, a condenser 105, and a second throttling element 106. The evaporator 103 communicates with the liquid storage tank 102, the liquid storage tank 102 communicates with the compressor 101, the compressor 101 communicates with the condenser 105, and the condenser 105 communicates with the evaporator 103 through the first throttling element 104. In the heat pump subsystem 100, based on a heat pump principle described above, refrigerant is evaporated in the evaporator 103 for cooling, and is condensed in the condenser 105 for heating.

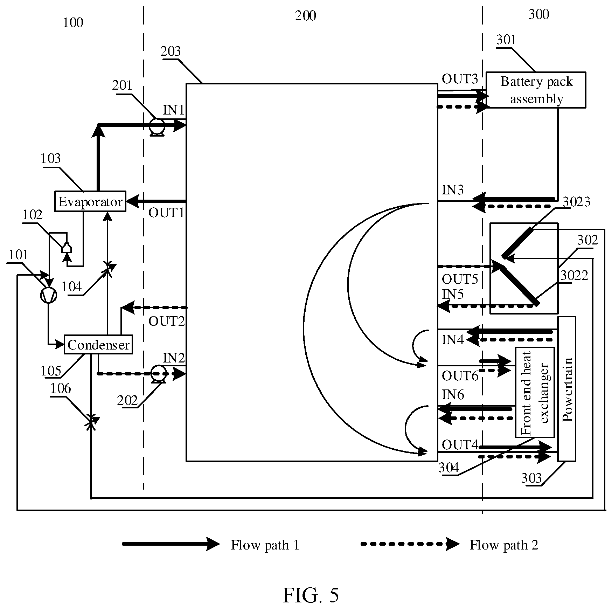

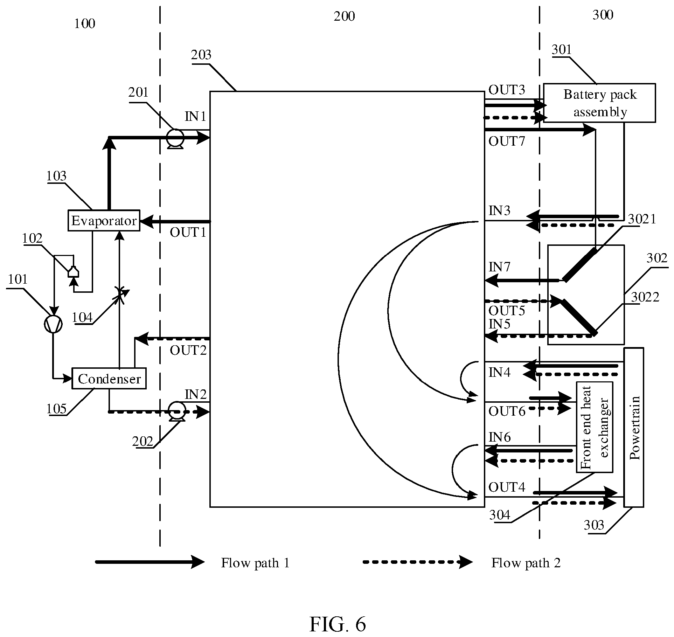

The thermal management component terminal subsystem 300 includes but is not limited to a passenger cabin air handling assembly 302, a powertrain 303, and a front end heat exchanger 304. Optionally, as shown in FIG. 5 and FIG. 6, the thermal management component terminal subsystem 300 further includes a battery pack assembly 301.

The battery pack assembly 301 includes but is not limited to a battery pack and a heat exchanger of the battery pack. Coolant flows in the heat exchanger of the battery pack, and is used to perform heat exchange with the battery pack, for example, used to dissipate heat for the battery pack in summer and heat the battery pack in winter. The passenger cabin air handling assembly 302 includes but is not limited to a cooling heat exchanger 3021 of a passenger cabin, a heating heat exchanger 3022 of the passenger cabin, and a direct expansion evaporator 3023. Coolant flows in the cooling heat exchanger 3021 (in a flow path 1 in the figure), to cool the passenger cabin. Coolant flows in the heating heat exchanger 3022 (in a flow path 2 in the figure), to heat the passenger cabin. Refrigerant flows in the direct expansion evaporator 3023, to cool the passenger cabin.

The flow path control subsystem 200 includes but is not limited to an evaporator branch pump 201, a condenser branch pump 202, and a valve assembly apparatus 203. Coolant flows in the flow path control subsystem 200, and the evaporator branch pump 201 drives the coolant to exchange heat with refrigerant in the evaporator 103, to cool the coolant. The condenser branch pump 202 drives the coolant to exchange heat with refrigerant in the condenser 105, to heat the coolant. The valve assembly apparatus 203 is configured to: control a flow path of coolant, for example, isolate cooled coolant and heated coolant, and deliver the two types of coolant to different heat exchangers in the thermal management component terminal subsystem 300 based on a working condition of a heat exchange system.

The valve assembly apparatus 203 includes but is not limited to a controller, an actuator, a first inlet and outlet set, and a second inlet and outlet set, and optionally, further includes a feedback mechanism. The valve assembly apparatus 203 is connected to a coolant outlet and a coolant inlet of the condenser 105, and the valve assembly apparatus 203 is further connected to a coolant outlet and a coolant inlet of the evaporator 103.

The first inlet and outlet set includes a first coolant inlet and outlet and a second coolant inlet and outlet. The second inlet and outlet set includes one or more of the following inlets and outlets: a powertrain inlet and outlet, a passenger cabin heating inlet and outlet, and a front end inlet and outlet. Optionally, the second inlet and outlet set further includes a battery pack inlet and outlet. An inlet in the inlet and outlet is configured to allow inflow of coolant, and an outlet in the inlet and outlet is configured to allow outflow of coolant.

The actuator includes but is not limited to a valve assembly and a water pump, and the actuator communicates with the first inlet and outlet set and the second inlet and outlet set. The feedback mechanism is configured to feed back an open/closed state of the valve assembly.

The controller is configured to control, based on a working condition of the vehicle cooling system, the actuator to communicate at least one inlet in the first inlet and outlet set with at least one outlet in the second inlet and outlet set, and communicate at least one outlet in the first inlet and outlet set with at least one inlet in the second inlet and outlet set, in other words, control a flow path of coolant in the valve assembly apparatus 203. For a specific control method performed by the controller, refer to description of the following scenarios.

As shown in FIG. 1 and FIG. 2, the first coolant inlet and outlet includes an outlet OUT1 in the first coolant inlet and outlet and an inlet IN1 in the first coolant inlet and outlet. The second coolant inlet and outlet includes an outlet OUT2 in the second coolant inlet and outlet and an inlet IN2 in the second coolant inlet and outlet. The powertrain inlet and outlet includes an outlet OUT4 in the powertrain inlet and outlet and an inlet IN4 in the powertrain inlet and outlet. The passenger cabin heating inlet and outlet includes an outlet OUT5 in the passenger cabin heating inlet and outlet and an inlet IN5 in the passenger cabin heating inlet and outlet. The front end inlet and outlet includes an outlet OUT6 in the front end inlet and outlet and an inlet IN6 in the front end inlet and outlet. Optionally, as shown in FIG. 5 and FIG. 6, there is an outlet OUT3 in the battery pack inlet and outlet and an inlet IN3 in the battery pack inlet and outlet.

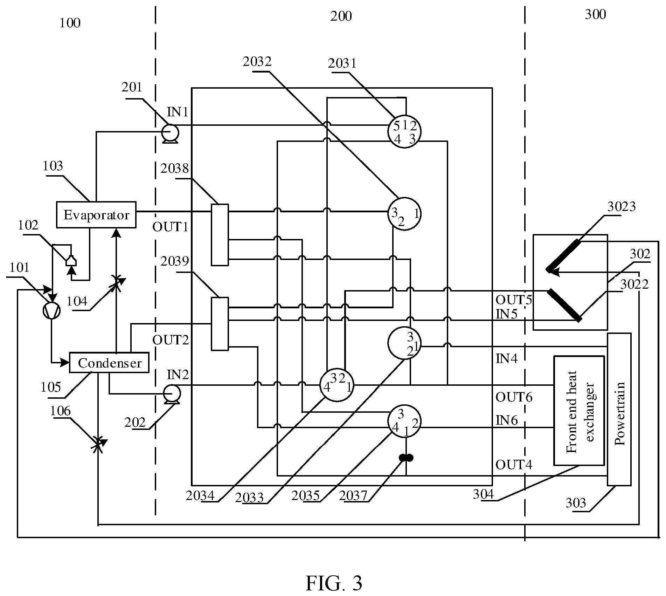

As shown in FIG. 3 and FIG. 5, when the passenger cabin is directly cooled by evaporating refrigerant by using the direct expansion evaporator 3023, an outlet of the direct expansion evaporator 3023 communicates with the compressor 101, and an inlet of the direct expansion evaporator 3023 communicates with the condenser 105 through the second throttling element 106.

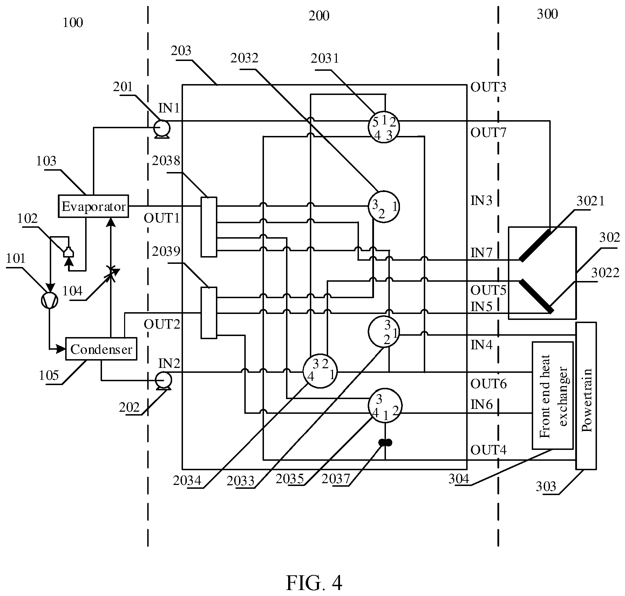

Optionally, as shown in FIG. 4 and FIG. 6, when the passenger cabin is indirectly cooled by using coolant, the second inlet and outlet set may further include a passenger cabin cooling inlet and outlet. The passenger cabin cooling inlet and outlet includes an outlet OUT7 in the passenger cabin cooling inlet and outlet and an inlet IN7 in the passenger cabin cooling inlet and outlet.

The inlet IN1 in the first coolant inlet and outlet is configured to be connected to the coolant outlet of the evaporator 103 (for example, by using the evaporator branch pump 201), and may be configured to allow coolant cooled by the evaporator 103 to flow to the valve assembly apparatus 203. The outlet OUT1 in the first coolant inlet and outlet is configured to be connected to the coolant inlet of the evaporator 103. After absorbing heat in the thermal management component terminal subsystem 300, the coolant cooled by the evaporator 103 flows from the valve assembly apparatus 203 to the evaporator 103 through the outlet OUT1 in the first coolant inlet and outlet. The inlet IN2 in the second coolant inlet and outlet is configured to be connected to the coolant outlet of the condenser 105 (for example, by using the condenser branch pump 202), and may be configured to allow coolant heated by the condenser 105 to flow to the valve assembly apparatus 203. The outlet OUT2 in the second coolant inlet and outlet is configured to be connected to the coolant inlet of the condenser 105. After dissipating heat in the thermal management component terminal subsystem 300, the coolant heated by the condenser 105 flows from the valve assembly apparatus 203 to the condenser 105 through the outlet OUT2 in the second coolant inlet and outlet.

When the second inlet and outlet set includes the battery pack inlet and outlet, the outlet OUT3 in the battery pack inlet and outlet is configured to be connected to an inlet of the heat exchanger of the battery pack in the battery pack assembly 301, and may be configured to allow the coolant cooled by the evaporator 103 or the coolant heated by the condenser 105 to flow to the battery pack assembly 301; and the inlet IN3 in the battery pack inlet and outlet is configured to be connected to an outlet of the heat exchanger of the battery pack in the battery pack assembly 301, and may be configured to allow coolant for which heat exchange is performed by using the battery pack assembly 301 to flow to the valve assembly apparatus 203.

When the second inlet and outlet set includes the powertrain inlet and outlet, the outlet OUT4 in the powertrain inlet and outlet is configured to be connected to an inlet of a heat exchanger of the powertrain 303, and may be configured to allow the coolant cooled by the evaporator 103 or the coolant heated by the condenser 105 to flow to the powertrain 303; and the inlet IN4 in the powertrain inlet and outlet is configured to be connected to an outlet of the heat exchanger of the powertrain 303, and may be configured to allow coolant for which heat exchange is performed by using the powertrain 303 to flow to the valve assembly apparatus 203.

When the second inlet and outlet set includes the passenger cabin heating inlet and outlet, the outlet OUT5 in the passenger cabin heating inlet and outlet is configured to be connected to an inlet of the heating heat exchanger 3022 of the passenger cabin, may be configured to allow the coolant heated by the condenser 105 to flow to the heating heat exchanger 3022 of the passenger cabin; and the inlet IN5 in the passenger cabin heating inlet and outlet is configured to be connected to an outlet of the heating heat exchanger 3022 of the passenger cabin, and may be configured to allow coolant for which heat exchange is performed by using the heating heat exchanger 3022 of the passenger cabin to flow to the valve assembly apparatus 203.

When the second inlet and outlet set includes the front end inlet and outlet, the outlet OUT6 in the front end inlet and outlet is configured to be connected to an inlet of the front end heat exchanger 304, and may be configured to allow the coolant cooled by the evaporator 103 or the coolant heated by the condenser 105 to flow to the front end heat exchanger 304; and the inlet IN6 in the front end inlet and outlet is configured to be connected to an outlet of the front end heat exchanger 304, and may be configured to allow coolant for which heat exchange is performed by using the front end heat exchanger 304 to flow to the valve assembly apparatus 203.

When the second inlet and outlet set includes the passenger cabin cooling inlet and outlet, the outlet OUT7 in the passenger cabin cooling inlet and outlet is configured to be connected to an inlet of the cooling heat exchanger 3021 of the passenger cabin, and may be configured to allow the coolant cooled by the evaporator 103 to flow to the cooling heat exchanger 3021 of the passenger cabin; and the inlet IN7 in the passenger cabin cooling inlet and outlet is configured to be connected to an outlet of the cooling heat exchanger 3021 of the passenger cabin, and may be configured to allow coolant for which heat exchange is performed by using the cooling heat exchanger 3021 of the passenger cabin to flow to the valve assembly apparatus 203.

In addition, as shown in FIG. 5 and FIG. 6, the coolant that flows to the valve assembly apparatus 203 from the inlet IN3 in the battery pack inlet and outlet may flow out from the outlet OUT6 in the front end inlet and outlet or the outlet OUT4 in the powertrain inlet and outlet, the coolant that flows to the valve assembly apparatus 203 from the inlet IN4 in the powertrain inlet and outlet may flow out from the outlet OUT6 in the front end inlet and outlet, and the coolant that flows to the valve assembly apparatus 203 from the inlet IN6 in the front end inlet and outlet may flow out from the outlet OUT4 in the powertrain inlet and outlet.

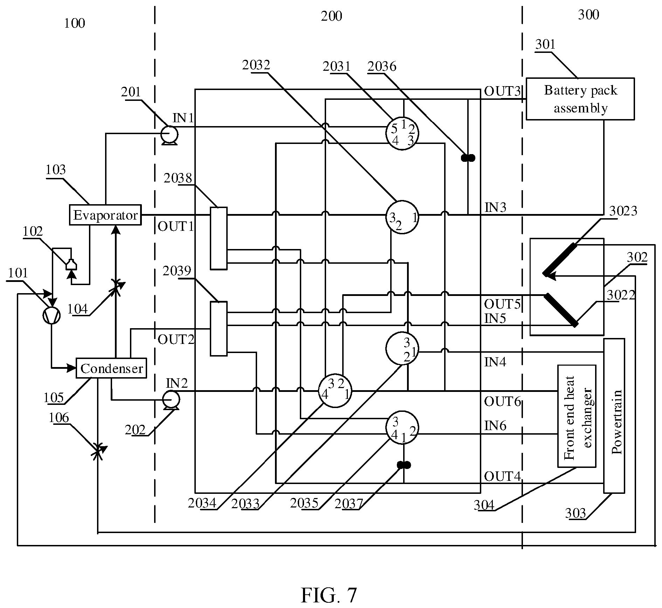

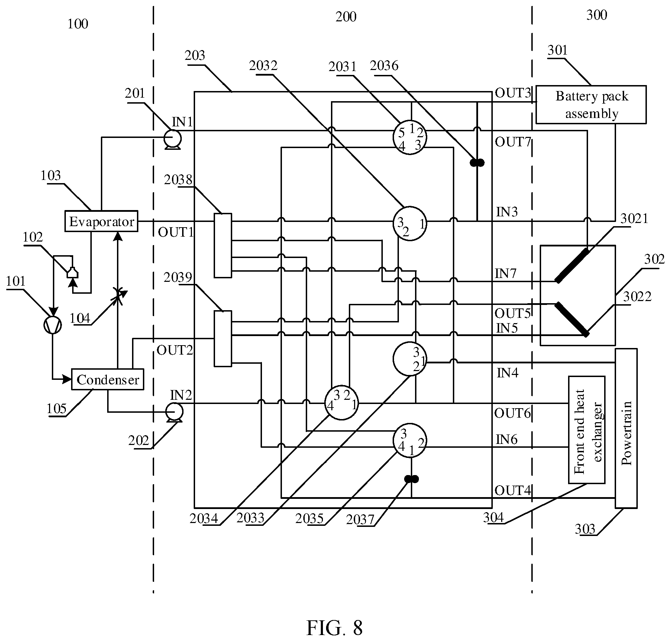

A structure of the valve assembly apparatus 203 is not limited in this application. For example, as shown in FIG. 3 (corresponding to FIG. 1), FIG. 4 (corresponding to FIG. 2), FIG. 7 (corresponding to FIG. 5), and FIG. 8 (corresponding to FIG. 6), the actuator in the valve assembly apparatus 203 includes a first valve assembly 2031, a second valve assembly 2032, a third valve assembly 2033, a fourth valve assembly 2034, and a fifth valve assembly 2035. Optionally, the valve assembly apparatus 203 further includes a battery pack temperature compensation pump 2036, a powertrain circulation pump 2037, a first water tank 2038, and a second water tank 2039.

The first water tank 2038 is configured to store coolant that flows through the evaporator 103, and the second water tank 2039 is configured to store coolant that flows through the condenser 105.

The outlet OUT5 in the passenger cabin heating inlet and outlet is connected to a second terminal of the fourth valve assembly 2034, and the inlet IN5 in the passenger cabin heating inlet and outlet is connected to the second water tank 2039.

The outlet OUT4 in the powertrain inlet and outlet is connected to a fourth terminal of the first valve assembly 2031 and a first terminal of the fifth valve assembly 2035, and the inlet IN4 in the powertrain inlet and outlet is connected to a first terminal of the third valve assembly 2033.

The outlet OUT6 in the front end inlet and outlet is connected to a third terminal of the first valve assembly 2031, a second terminal of the third valve assembly 2033, and a first terminal of the fourth valve assembly 2034, and the inlet IN6 in the front end inlet and outlet is connected to a second terminal of the fifth valve assembly 2035.

The inlet IN1 in the first coolant inlet and outlet is connected to a fifth terminal of the first valve assembly 2031, and the inlet IN2 in the second coolant inlet and outlet is connected to a fourth terminal of the fourth valve assembly 2034.

The first water tank 2038 is further connected to a third terminal of the second valve assembly 2032, a third terminal of the fifth valve assembly 2035, and a third terminal of the third valve assembly 2033. The second water tank 2039 is further connected to a second terminal of the second valve assembly 2032, the fourth terminal of the first valve assembly 2031, and a fourth terminal of the fifth valve assembly 2035. A first terminal of the first valve assembly 2031 is connected to a third terminal of the fourth valve assembly 2034.

Optionally, the outlet OUT3 in the battery pack inlet and outlet is connected to the first terminal of the first valve assembly 2031 and the third terminal of the fourth valve assembly 2034, and the inlet IN3 in the battery pack inlet and outlet is connected to a first terminal of the second valve assembly 2032.

Optionally, the outlet OUT3 in the battery pack inlet and outlet is further connected to the inlet IN3 in the battery pack inlet and outlet by using the battery pack temperature compensation pump 2036.

Optionally, the outlet OUT7 in the passenger cabin cooling inlet and outlet is connected to a second terminal of the first valve assembly 2031, and the inlet IN7 in the passenger cabin cooling inlet and outlet is connected to the first water tank 2038.

Optionally, the first terminal of the fifth valve assembly 2035 is connected to the outlet OUT4 in the powertrain inlet and outlet by using the powertrain circulation pump 2037.

The vehicle cooling system and the valve assembly apparatus provided in embodiments of this application may be applied to various scenarios shown in Table 1:

**Table 1**

| Scenario | | Passenger cabin | | | Battery pack assembly | | | Powertrain | | | Front end heat exchanger * |
|---|---|---|---|---|---|---|---|---|---|---|---|
| | | Heating | Cooling | Dehumidification | Heating | Cooling | Natural cooling | Heat recovery | Natural cooling | Active cooling | |
| Parking and charging | Battery preheating | | | | √ | | | | | | Colder |
| | Battery heat dissipation | | | | | √ | | | | | Hotter |
| Summer | Normal running | | √ | | | √ | | | √ | | Hotter |
| | Violent running | | √ | | | √ | | | | √ | Hotter |
| Spring and autumn | Normal running | | | √ | | √ | | | √ | | Hotter |
| | | | | | | √ | | | √ | | Hotter |
| | | | | | | | √ | | √ | | |
| Winter | Warm-up | √ | | | √ | | | | | | Colder |
| | Non-cooling dehumidification | √ | | √ | | √ | | | √ | | Colder |
| | Normal running | √ | | | √ | | | | √ | | Colder |
| | | √ | | | | √ | | | √ | | Colder |
| | Energy saving | √ | | | √ | | | √ | | | Colder |
| | | √ | | | | √ | | √ | | | Colder |
| | Defrosting | | | | | | | √ | | | Colder, hotter |

The front end heat exchanger* represents that coolant that flows in the front end heat exchanger 304 is colder or hotter than ambient air.

The controller in the valve assembly apparatus 203 may obtain an instruction for performing heat exchange (cooling or heating) on the passenger cabin, the battery pack assembly, or the powertrain from a host computer such as a vehicle running dynamic control system (vehicle running dynamic control system, VDC).

How the controller in the valve assembly apparatus 203 controls the actuator under various working conditions of the vehicle cooling system is described below.

### Normal running (non-violent running) at a high temperature in summer:

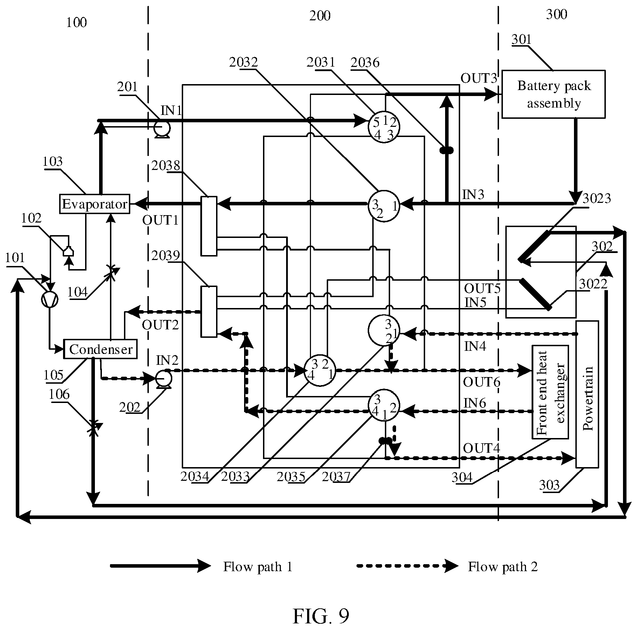

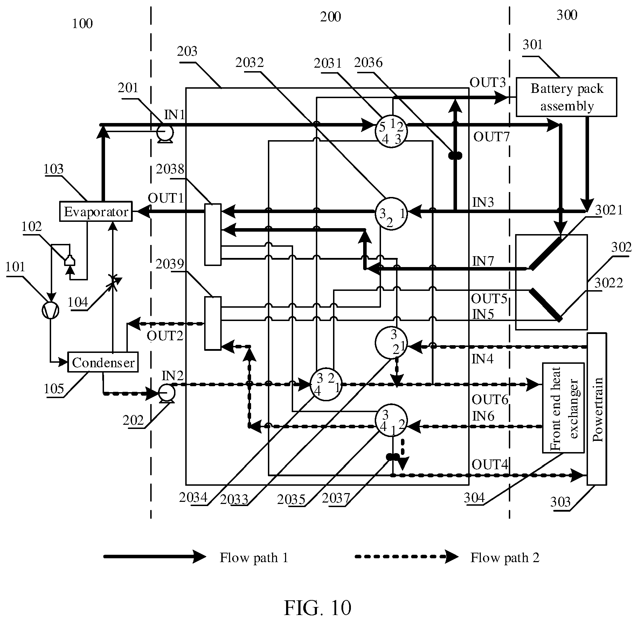

As shown in FIG. 9 and FIG. 10, if the vehicle normally runs at a relatively high ambient temperature in summer, the passenger cabin and the battery pack assembly 301 are cooled by running the heat pump subsystem 100, the evaporator branch pump 201, and the condenser branch pump 202, and natural heat dissipation is performed on the powertrain 303 by using the front end heat exchanger 304.

During cooling of the battery pack assembly 301, the controller controls the actuator to communicate the inlet IN1 in the first coolant inlet and outlet with the outlet OUT3 in the battery pack inlet and outlet, and communicate the outlet OUT1 in the first coolant inlet and outlet with the inlet IN3 in the battery pack inlet and outlet.

Specifically, the controller controls the fifth terminal of the first valve assembly 2031 to communicate with the first terminal, and controls the first terminal of the second valve assembly 2031 to communicate with the third terminal. The coolant circulates through the evaporator 103, the evaporator branch pump 201, the first valve assembly 2031, the heat exchanger of the battery pack assembly 301, the second valve assembly 2032, and the first water tank 2038.

The controller further controls the battery pack temperature compensation pump 2036 to run, to mix coolant that flows out from the heat exchanger of the battery pack and coolant that flows to the battery pack to increase a temperature of the coolant that flows to the battery pack, so that the battery pack works at an optimal working temperature, to avoid a case in which output power is reduced due to an excessively low temperature of the battery pack. For example, the temperature of the coolant is increased from 8 degrees to 20 degrees.

For cooling of the passenger cabin, as shown in FIG. 9, the passenger cabin may be directly cooled by using the direct expansion evaporator 3023. Alternatively, as shown in FIG. 10, the controller may control the actuator to communicate the inlet IN1 in the first coolant inlet and outlet with the outlet OUT5 in the passenger cabin cooling inlet and outlet, and communicate the outlet OUT1 in the first coolant inlet and outlet with the inlet IN5 in the passenger cabin cooling inlet and outlet.

Specifically, the controller controls the fifth terminal of the first valve assembly 2031 to communicate with the second terminal. The coolant circulates through the evaporator 103, the evaporator branch pump 201, the first valve assembly 2031, the cooling heat exchanger 3021 of the passenger cabin, and the first water tank 2038.

When natural heat dissipation is performed on the powertrain 303 by using the front end heat exchanger 304, the controller controls the actuator to communicate the inlet IN2 in the second coolant inlet and outlet, the inlet IN4 in the powertrain inlet and outlet, and the outlet OUT6 in the front end inlet and outlet, and communicate the outlet OUT2 in the second coolant inlet and outlet, the outlet OUT4 in the powertrain inlet and outlet, and the inlet IN6 in the front end inlet and outlet.

Specifically, the controller controls the powertrain circulation pump 2037 to run, controls the first terminal of the third valve assembly 2033 to communicate with the second terminal, controls the fourth terminal of the fourth valve assembly 2034 to communicate with the first terminal, and controls the second terminal of the fifth valve assembly 2035 to communicate with the first terminal and the fourth terminal. A part of the coolant circulates through the condenser 105, the condenser branch pump 202, the fourth valve assembly 2034, the front end heat exchanger 304, the fifth valve assembly 2035, and the second water tank 2039. The other part of the coolant circulates through the front end heat exchanger 304, the fifth valve assembly 2035, the powertrain circulation pump 2037, the heat exchanger of the powertrain 303, and the third valve assembly 2033. In addition, the two parts of coolant are mixed in the front end heat exchanger 304. Therefore, the coolant in the front end heat exchanger 304 has a relatively high temperature, and heat exchange is performed with air to perform natural heat dissipation.

In this implementation, natural heat dissipation is performed on the powertrain 303, and cooling of the powertrain 303 is omitted. Therefore, a rotational speed of the compressor 101 can be reduced, and an evaporating temperature of refrigerant in the evaporator 103 can be increased. Therefore, energy consumption for cooling is reduced, and endurance mileage is increased.

### Normal running at an appropriate temperature (non-high temperature) in summer:

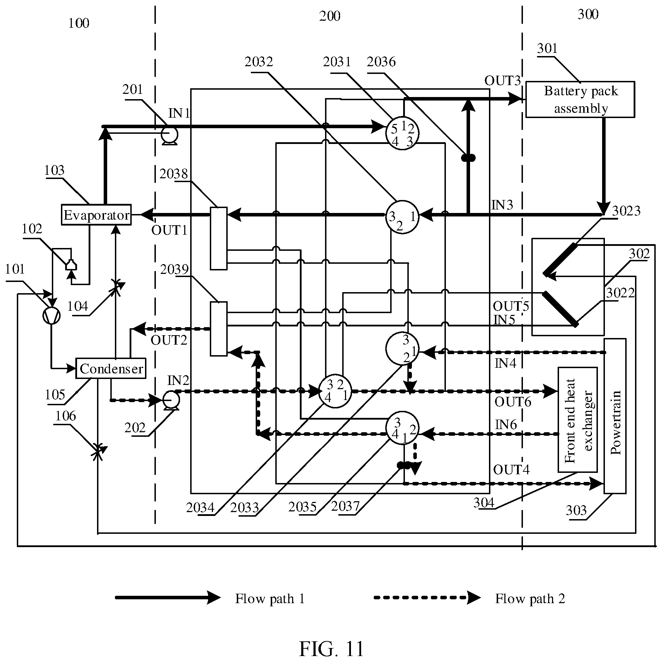

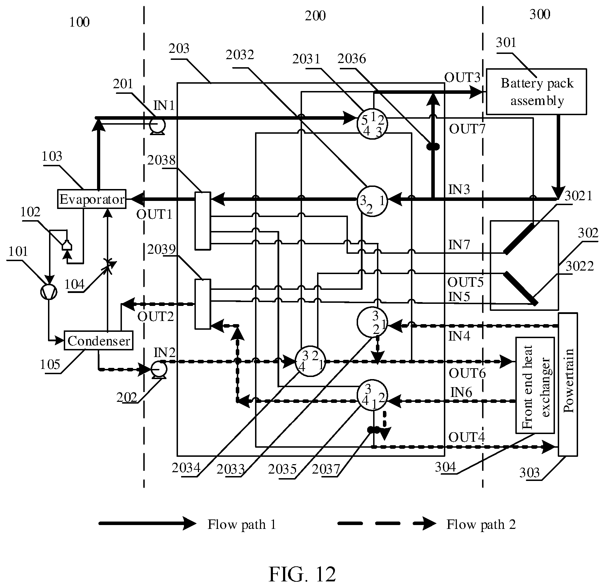

As shown in FIG. 11 and FIG. 12, if the vehicle normally runs at a relatively appropriate ambient temperature in summer, there is no need to cool the passenger cabin, the battery pack assembly 301 is cooled by running the heat pump subsystem 100, the evaporator branch pump 201, and the condenser branch pump 202, and natural heat dissipation is performed on the powertrain 303 by using the front end heat exchanger 304.

For cooling of the battery pack assembly 301, refer to the related description in FIG. 9 and FIG. 10. No repeated description is provided herein.

For natural heat dissipation performed on the powertrain 303 by using the front end heat exchanger 304, refer to the related description in FIG. 9 and FIG. 10. No repeated description is provided herein.

A difference between FIG. 11 and FIG. 9 lies in that there is no need to directly cool the passenger cabin by using the direct expansion evaporator 3023.

A difference between FIG. 12 and FIG. 10 lies in that the controller does not need to control the actuator to communicate the inlet IN1 in the first coolant inlet and outlet with the outlet OUT5 in the passenger cabin cooling inlet and outlet, and does not need to control the actuator to communicate the outlet IN1 in the first coolant inlet and outlet with the inlet IN5 in the passenger cabin cooling inlet and outlet. For example, the controller controls the fifth terminal of the first valve assembly 2031 to be disconnected from the second terminal.

In comparison with FIG. 9 or FIG. 10, in this implementation, cooling of the passenger cabin is omitted. Therefore, a rotational speed of the compressor 101 can be reduced, and an evaporating temperature of refrigerant in the evaporator 103 can be increased. Therefore, energy consumption for cooling is reduced, and endurance mileage is increased.

### Violent running at a high temperature in summer:

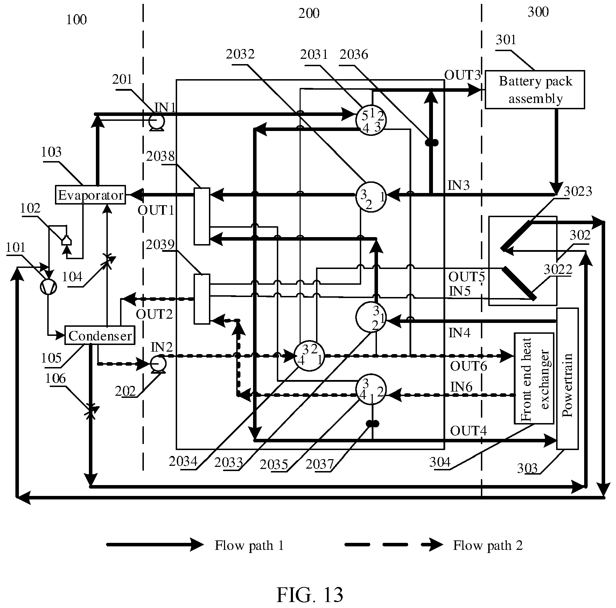

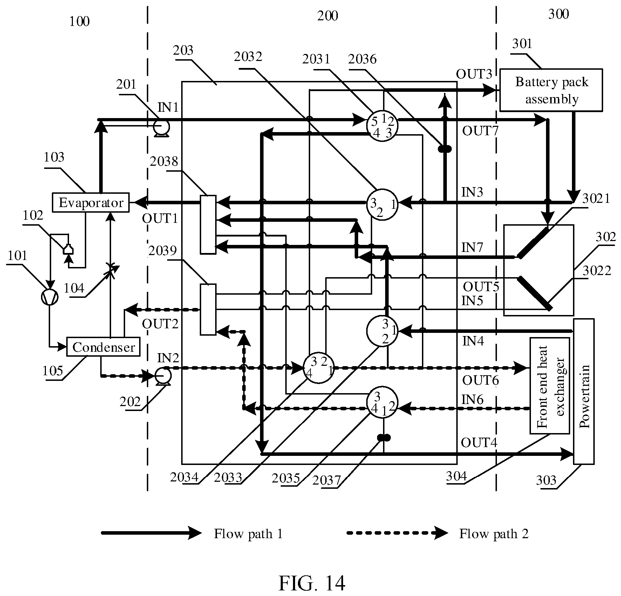

As shown in FIG. 13 and FIG. 14, if the vehicle violently runs at a relatively high ambient temperature in summer, the powertrain 303 outputs high torque or a high rotational speed. In this case, heat generated by the powertrain 303 is increased, and the powertrain 303 cannot be effectively cooled if natural heat dissipation is performed on the powertrain 303. In this case, the passenger cabin, the battery pack assembly 301, and the powertrain 303 are cooled by running the heat pump subsystem 100, the evaporator branch pump 201, and the condenser branch pump 202, and natural heat dissipation is performed on the condenser 105 by using the front end heat exchanger 304.

For cooling of the battery pack assembly 301, refer to the description in FIG. 9 and FIG. 10. No repeated description is provided herein.

During cooling of the powertrain 303, the controller controls the actuator to communicate the inlet IN1 in the first coolant inlet and outlet with the outlet OUT4 in the powertrain inlet and outlet, and communicate the outlet OUT1 in the first coolant inlet and outlet with the inlet IN4 in the powertrain inlet and outlet. Specifically, the controller controls the fifth terminal of the first valve assembly 2031 to communicate with the fourth terminal, controls the first terminal of the third valve assembly 2033 to communicate with the third terminal, and controls the first terminal of the third valve assembly 2033 to be disconnected from the second terminal. The coolant circulates through the evaporator 103, the evaporator branch pump 201, the first valve assembly 2031, the heat exchanger of the powertrain 303, the third valve assembly 2033, and the first water tank 2038.

When natural heat dissipation is performed on the condenser 105 by using the front end heat exchanger 304, the controller controls the actuator to communicate the inlet IN2 in the second coolant inlet and outlet with the outlet OUT6 in the front end inlet and outlet, and communicate the outlet in the second coolant inlet and outlet with the inlet IN6 in the front end inlet and outlet. Specifically, the controller controls the first terminal of the fourth valve assembly 2034 to communicate with the fourth terminal, controls the second terminal of the fifth valve assembly 2035 to communicate with the fourth terminal, controls the second terminal of the fifth valve assembly 2035 to be disconnected from the first terminal, and controls the powertrain circulation pump 2037 to stop running. The coolant circulates through the condenser 105, the condenser branch pump 202, the fourth valve assembly 2034, the front end heat exchanger 304, the fifth valve assembly 2035, and the second water tank 2039.

In this implementation, natural heat dissipation is performed on the condenser 105 by using the front end heat exchanger 304, to reduce a condensing temperature of coolant in the condenser 105. Therefore, energy consumption for cooling is reduced, and endurance mileage is increased.

Violent running at an appropriate temperature in summer and in spring and autumn:

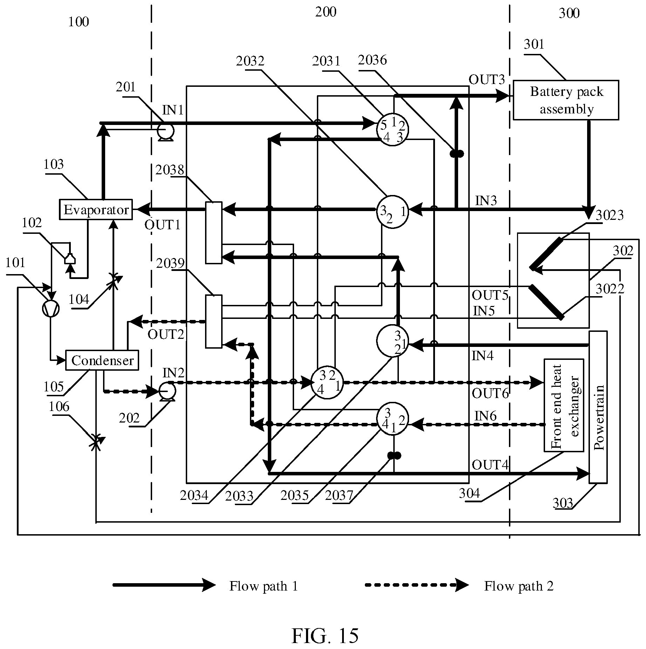

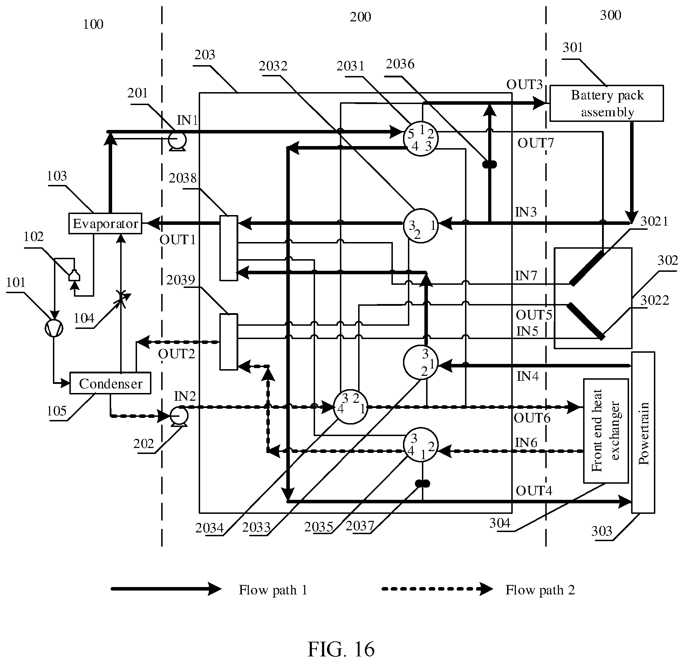

As shown in FIG. 15 and FIG. 16, if the vehicle normally runs at a relatively appropriate ambient temperature in summer, there is no need to cool the passenger cabin, the battery pack assembly 301 and the powertrain 303 are cooled by running the heat pump subsystem 100, the evaporator branch pump 201, and the condenser branch pump 202, and natural heat dissipation is performed on the condenser 105 by using the front end heat exchanger 304, to reduce a condensing temperature of coolant in the condenser 105. Therefore, energy consumption for cooling is reduced, and endurance mileage is increased.

For cooling of the battery pack assembly 301, refer to the description in FIG. 9 and FIG. 10. No repeated description is provided herein.

For cooling of the powertrain 303, refer to the description in FIG. 13 and FIG. 14. No repeated description is provided herein.

A difference between FIG. 15 and FIG. 13 lies in that there is no need to directly cool the passenger cabin by using the direct expansion evaporator 3023.

A difference between FIG. 16 and FIG. 14 lies in that the controller does not need to control the actuator to communicate the inlet IN1 in the first coolant inlet and outlet with the outlet OUT5 in the passenger cabin cooling inlet and outlet, and does not need to control the actuator to communicate the outlet IN1 in the first coolant inlet and outlet with the inlet IN5 in the passenger cabin cooling inlet and outlet. For example, the controller controls the fifth terminal of the first valve assembly 2031 to be disconnected from the second terminal.

In comparison with FIG. 13 or FIG. 14, in this implementation, cooling of the passenger cabin is omitted. Therefore, a rotational speed of the compressor 101 can be reduced, and an evaporating temperature of refrigerant in the evaporator 103 can be increased. Therefore, energy consumption for cooling is reduced, and endurance mileage is increased.

### Parking and charging in summer:

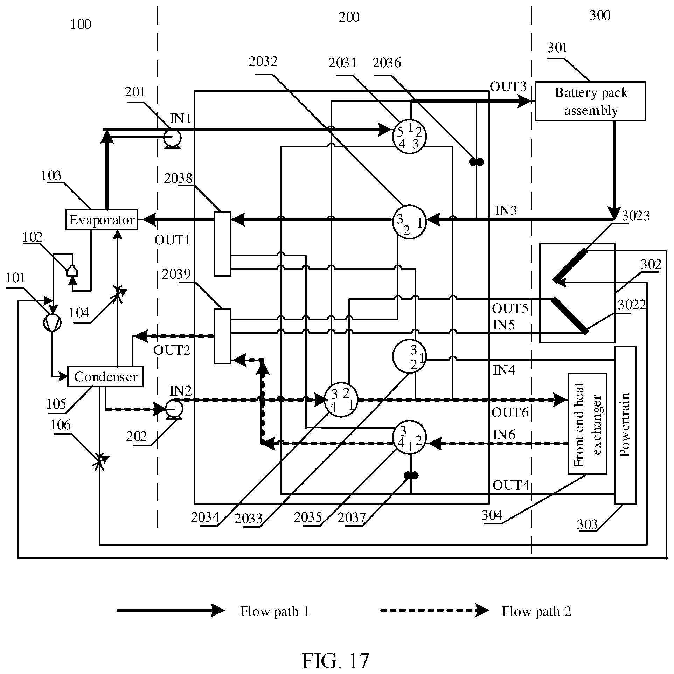

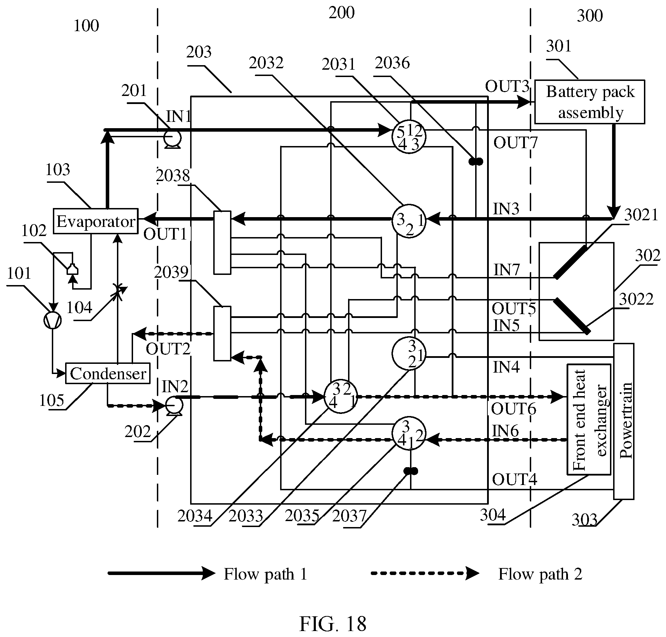

As shown in FIG. 17 and FIG. 18, if the vehicle is parked and charged in summer and there is a relatively high ambient temperature, the battery pack assembly 301 is cooled by running the heat pump subsystem 100, the evaporator branch pump 201, and the condenser branch pump 202, and natural heat dissipation is performed on the condenser 105 by using the front end heat exchanger 304.

During cooling of the battery pack assembly 301, the controller controls the battery pack temperature compensation pump 2036 and the powertrain circulation pump 2037 to stop running. If the passenger cabin needs to be cooled, the controller controls the battery pack temperature compensation pump 2036 to run, to mix a hot water part that flows out from the outlet of the heat exchanger of the battery pack into the inlet of the heat exchanger of the battery pack, so as to increase a temperature of coolant at the inlet of the heat exchanger of the battery pack, and ensure that a case in which a battery life is shortened due to an excessively low temperature of the coolant is avoided. If the passenger cabin does not need to be cooled, the controller controls the battery pack temperature compensation pump 2036 to stop running. For other content, refer to the description in FIG. 9 and FIG. 10. No repeated description is provided herein.

A difference between FIG. 17 and FIG. 15 and a difference between FIG. 18 and FIG. 16 are as follows:

The controller does not need to control the actuator to communicate the inlet IN1 in the first coolant inlet and outlet with the outlet OUT4 in the powertrain inlet and outlet, and does not need to control the actuator to communicate the outlet IN1 in the first coolant inlet and outlet with the inlet IN4 in the powertrain inlet and outlet. For example, the controller controls the fifth terminal of the first valve assembly 2031 to be disconnected from the fourth terminal, controls the first terminal of the fourth valve assembly 2034 to be disconnected from the third terminal, and controls the battery pack temperature compensation pump 2036 and the powertrain circulation pump 2037 to stop working.

In comparison with FIG. 15 or FIG. 16, in this implementation, cooling of the powertrain 303 is omitted. Therefore, a rotational speed of the compressor 101 can be reduced, and an evaporating temperature of refrigerant in the evaporator 103 can be increased. In addition, natural heat dissipation is performed on the condenser 105 by using the front end heat exchanger 304, to reduce a condensing temperature of coolant in the condenser 105. Therefore, energy consumption for cooling is reduced, and endurance mileage is increased.

### Normal running at an approximate temperature in spring and autumn:

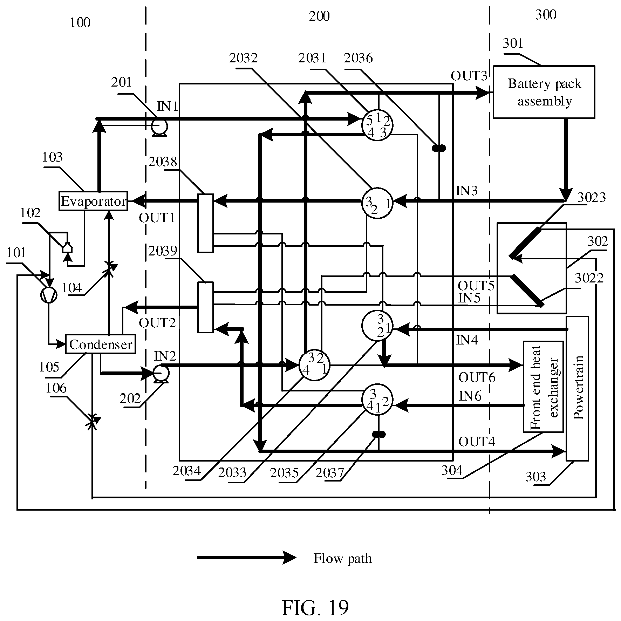

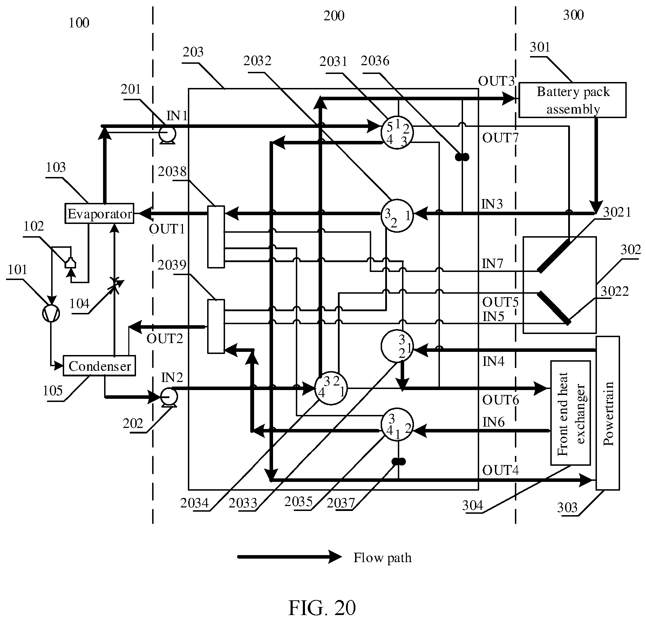

As shown in FIG. 19 and FIG. 20, if the vehicle normally runs at a relatively appropriate ambient temperature in spring and autumn, there is no need to cool the passenger cabin, the heat pump subsystem 100 is controlled to be shut down, the evaporator branch pump 201 and the condenser branch pump 202 are controlled to run, and natural heat dissipation is performed on the battery pack assembly 301 and the powertrain 303 by using the front end heat exchanger 304.

When natural heat dissipation is performed on the battery pack assembly 301 and the powertrain 303, the controller controls the actuator to communicate the inlet IN1 in the first coolant inlet and outlet with the outlet OUT4 in the powertrain inlet and outlet, communicate the inlet IN4 in the powertrain inlet and outlet with the outlet OUT6 in the front end inlet and outlet, communicate the inlet IN6 in the front end inlet and outlet with the outlet OUT2 in the second coolant inlet and outlet, communicate the inlet IN2 in the second coolant inlet and outlet with the outlet OUT3 in the battery pack inlet and outlet, and communicate the inlet IN3 in the battery pack inlet and outlet with the outlet OUT1 in the first coolant inlet and outlet.

Specifically, the controller controls the fifth terminal of the first valve assembly 2031 to communicate with the fourth terminal, controls the fifth terminal of the second valve assembly 2032 to communicate with the third terminal, controls the first terminal of the third valve assembly 2033 to communicate with the second terminal, controls the third terminal of the fourth valve assembly 2034 to communicate with the fourth terminal, controls the second terminal of the fifth valve assembly 2035 to communicate with the fifth terminal, and controls the battery pack temperature compensation pump 2036 and the powertrain circulation pump 2037 to stop working. The coolant circulates through the evaporator 103, the evaporator branch pump 201, the first valve assembly 2031, the heat exchanger of the powertrain 303, the third valve assembly 2033, the front end heat exchanger 304, the fifth valve assembly 2035, the second water tank 2039, the condenser 105, the condenser branch pump 202, the fourth valve assembly 2034, the heat exchanger of the battery pack assembly 301, the second valve assembly 2032, and the first water tank 2038.

In this implementation, under the action of the evaporator branch pump 201 and the condenser branch pump 202, heat generated by the battery pack assembly 301 and heat generated by the powertrain 303 are brought to the front end heat exchanger 304 by using coolant, and are dissipated into air, and natural heat dissipation is performed on the battery pack assembly 301 and the powertrain 303 by using the front end heat exchanger 304 and without running the compressor 101. Therefore, energy consumption can be reduced, and endurance mileage can be increased.

### Parking and charging in spring and autumn:

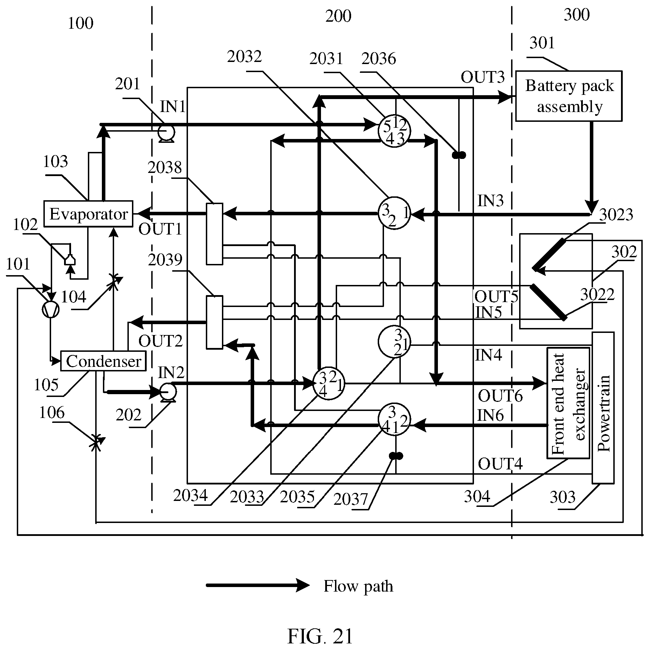

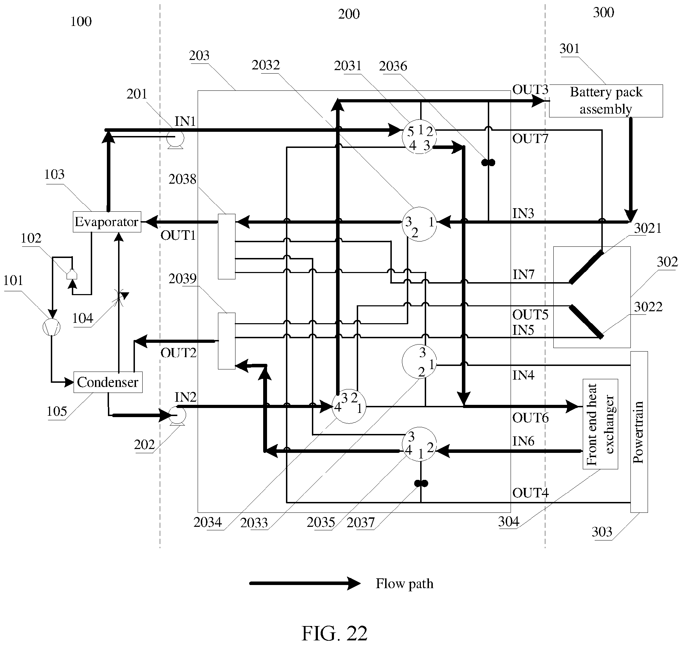

As shown in FIG. 21 and FIG. 22, if the vehicle is parked and charged in spring and autumn, the heat pump subsystem 100 is controlled to be shut down, the evaporator branch pump 201 and the condenser branch pump 202 are controlled to run, and natural heat dissipation is performed on the battery pack assembly 301 by using the front end heat exchanger 304.

When natural heat dissipation is performed on the battery pack assembly 301, the controller controls the actuator to communicate the inlet IN1 in the first coolant inlet and outlet with the outlet OUT6 in the front end inlet and outlet, communicate the inlet IN6 in the front end inlet and outlet with the outlet OUT2 in the second coolant inlet and outlet, communicate the inlet IN2 in the second coolant inlet and outlet with the outlet OUT3 in the battery pack inlet and outlet, and communicate the inlet IN3 in the battery pack inlet and outlet with the outlet OUT1 in the first coolant inlet and outlet.

Specifically, the controller controls the fifth terminal of the first valve assembly 2031 to communicate with the third terminal, controls the first terminal of the second valve assembly 2032 to communicate with the third terminal, controls the third terminal of the fourth valve assembly 2034 to communicate with the fourth terminal, controls the second terminal of the fifth valve assembly 2035 to communicate with the fourth terminal, and controls the battery pack temperature compensation pump 2036 and the powertrain circulation pump 2037 to stop working. The coolant circulates through the evaporator 103, the evaporator branch pump 201, the first valve assembly 2031, the front end heat exchanger 304, the fifth valve assembly 2035, the second water tank 2039, the condenser 105, the condenser branch pump 202, the fourth valve assembly 2034, the heat exchanger of the battery pack assembly 301, the second valve assembly 2032, and the first water tank 2038.

In this implementation, under the action of the evaporator branch pump 201 and the condenser branch pump 202, heat generated by the battery pack assembly 301 is brought to the front end heat exchanger 304 by using coolant, and is dissipated into air, and natural heat dissipation is performed on the battery pack assembly 301 by using the front end heat exchanger 304 and without running the compressor 101. Therefore, energy consumption can be reduced, and endurance mileage can be increased.

When the vehicle normally runs in winter, there is a relatively low ambient temperature. To ensure comfort of the passenger cabin, the passenger cabin is heated by running the heat pump subsystem 100, the evaporator branch pump 201, and the condenser branch pump 202, and heat generated by the battery pack assembly 301 and heat generated by the powertrain 303 are recovered (which is equivalent to cooling the battery pack assembly 301 and the powertrain 303).

### Normal running 1-1 in winter:

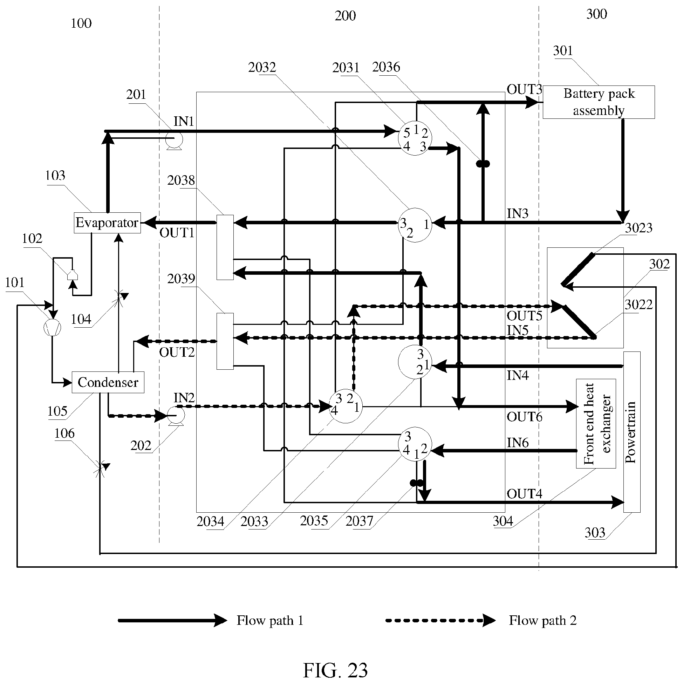

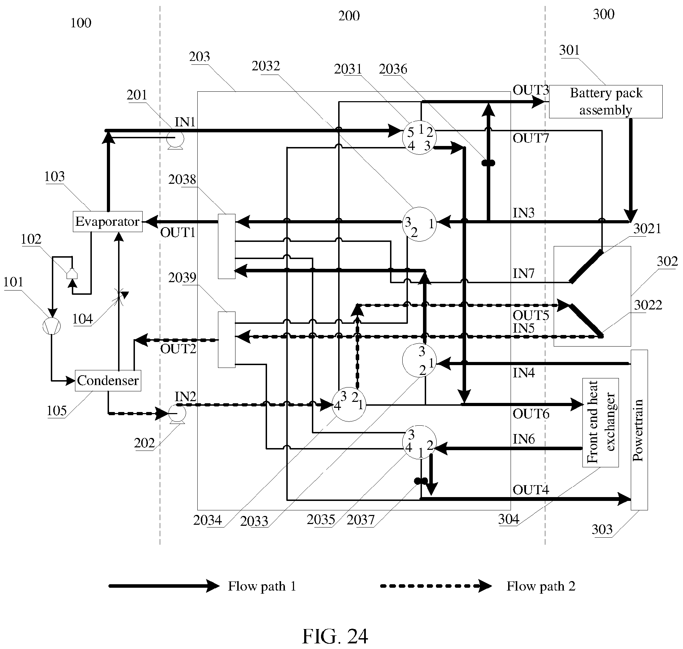

As shown in FIG. 23 and FIG. 24, a very high heating capacity is determined for the condenser 105 in the heat pump subsystem 100 based on a relatively low ambient temperature, and correspondingly, there is a very high cooling capacity for the evaporator 103 in the heat pump subsystem 100. In this case, if the powertrain 303 generates a very small amount of heat, a sum of heat generated by the battery pack assembly 301 and the heat generated by the powertrain 303 is still less than a cooling capacity of the heat pump subsystem 100, and a temperature of coolant that flows out from the evaporator 103 is less than the ambient temperature. Consequently, refrigerant in the evaporator 103 may have an excessively low evaporating temperature, and there is an increase in energy consumption for heating.

In this case, the passenger cabin may be heated, the heat generated by the battery pack assembly 301 and the heat generated by the powertrain 303 may be recovered (which is equivalent to cooling the battery pack assembly 301 and the powertrain 303), and before coolant flows through the heat exchanger of the powertrain 303, heat exchange is performed between the coolant that flows through the evaporator 103 and ambient air by using the front end heat exchanger 304, to absorb heat from the ambient air, to increase the evaporating temperature of the refrigerant in the evaporator 103, so as to reduce energy consumption for heating and increase endurance mileage.

During heating of the passenger cabin, the controller controls the actuator to communicate the inlet IN2 in the second coolant inlet and outlet with the outlet OUT5 in the passenger cabin heating inlet and outlet, and communicate the outlet OUT2 in the second coolant inlet and outlet with the inlet IN5 in the passenger cabin heating inlet and outlet. Specifically, the controller controls the second terminal of the fourth valve assembly 2034 to communicate with the fourth terminal. The coolant circulates through the condenser 105, the condenser branch pump 202, the fourth valve assembly 2034, the heating heat exchanger 3022 of the passenger cabin, and the second water tank 2039.

For recovery of the heat generated by the battery pack assembly 301 (in other words, cooling of the battery pack assembly 301), refer to the related description in FIG. 9 and FIG. 10. No repeated description is provided herein.

For recovery of the heat generated by the powertrain 303 (in other words, cooling of the powertrain 303), the controller controls the actuator to communicate the inlet IN1 in the first coolant inlet and outlet with the outlet OUT6 in the front end inlet and outlet, communicate the inlet IN6 in the front end inlet and outlet with the outlet OUT4 in the powertrain inlet and outlet, and communicate the inlet IN4 in the powertrain inlet and outlet with the outlet OUT1 in the first coolant inlet and outlet. Specifically, the controller controls the fifth terminal of the first valve assembly 2031 to communicate with the third terminal, and controls the first terminal of the fifth valve assembly 2035 to communicate with the second terminal. The coolant circulates through the evaporator 103, the evaporator branch pump 201, the first valve assembly 2031, the front end heat exchanger 304, the fifth valve assembly 2035, the powertrain 303, the third valve assembly 2033, and the first water tank 2038.

In this implementation, before the coolant absorbs the heat generated by the powertrain 303, heat exchange is performed with the ambient air by using the front end heat exchanger 304, to increase a temperature of the coolant, so as to increase the evaporating temperature of the refrigerant in the evaporator 103. Therefore, energy consumption for heating is reduced, and endurance mileage is increased.

### Normal running 1-2 in winter:

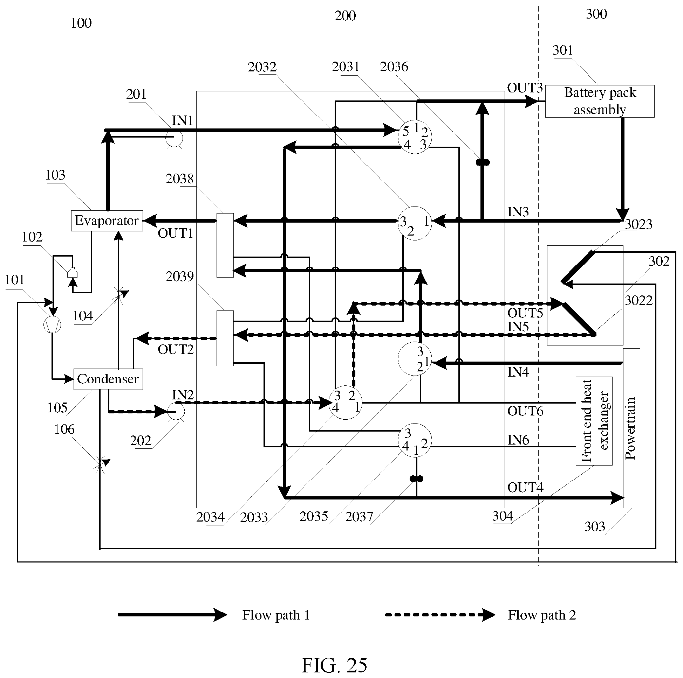

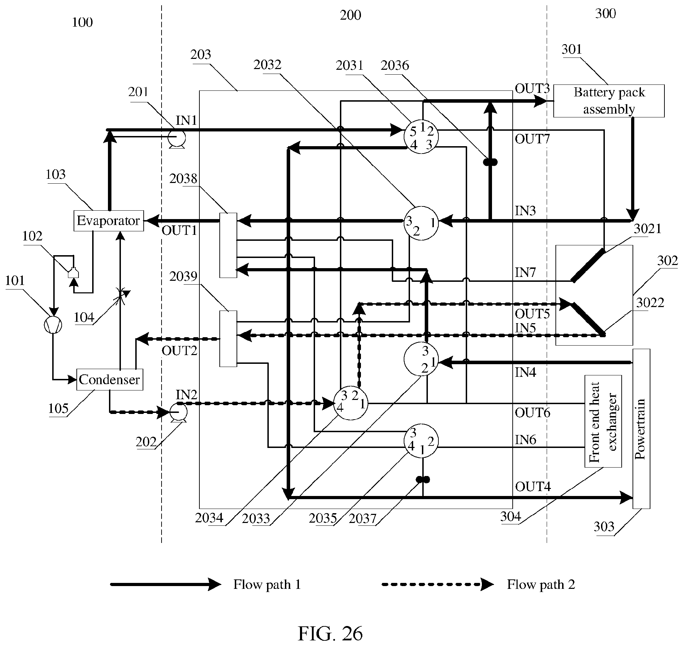

In comparison with the implementation in FIG. 23 and FIG. 24, as shown in FIG. 25 and FIG. 26, as the powertrain 303 continuously generates heat, a sum of heat generated by the battery pack assembly 301 and the heat generated by the powertrain 303 is approximately equal to a cooling capacity of the heat pump subsystem 100, and a temperature of coolant that flows out from the evaporator 103 continuously increases. When the temperature of the coolant is higher than an ambient temperature, there is switching from a mode in FIG. 23 (FIG. 24) to a mode in FIG. 25 (FIG. 26).

In this case, the passenger cabin may be heated, and the heat generated by the battery pack assembly 301 and the heat generated by the powertrain 303 may be recovered (which is equivalent to cooling the battery pack assembly 301 and the powertrain 303), to reduce energy consumption for heating and increase endurance mileage. There is no need to perform heat exchange between the coolant that flows through the evaporator 103 and ambient air by using the front end heat exchanger 304.

For heating of the passenger cabin, refer to the related description in FIG. 23 and FIG. 24. No repeated description is provided herein.

For recovery of the heat generated by the battery pack assembly 301 (in other words, cooling of the battery pack assembly 301), refer to the related description in FIG. 9 and FIG. 10. No repeated description is provided herein.

For recovery of the heat generated by the powertrain 303 (in other words, cooling of the powertrain 303), refer to the related description in FIG. 13 and FIG. 14. No repeated description is provided herein.

In this implementation, the coolant does not need to dissipate heat into the ambient air through the front end heat exchanger 304, to further increase an evaporating temperature of coolant in the evaporator 103. Therefore, while a pressure ratio of the compressor is reduced, energy consumption for heating can be reduced, and endurance mileage can be increased.

### Normal running 1-3 in winter:

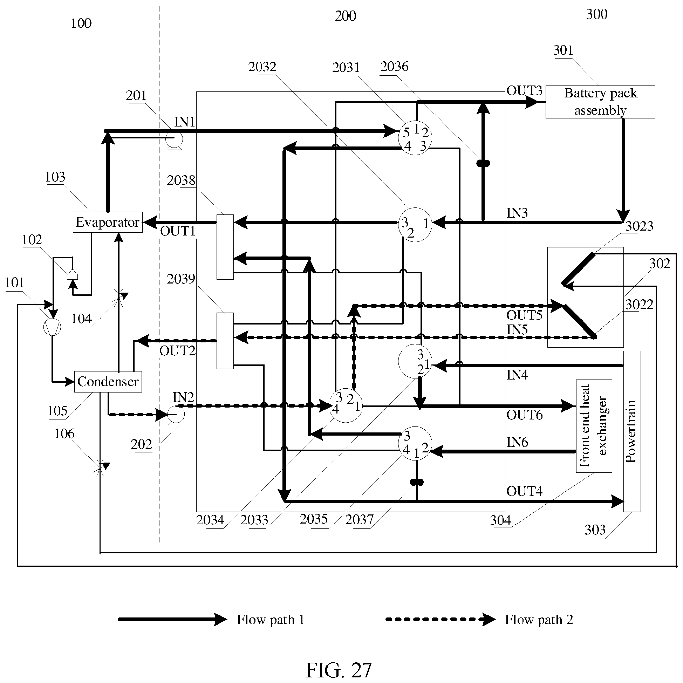

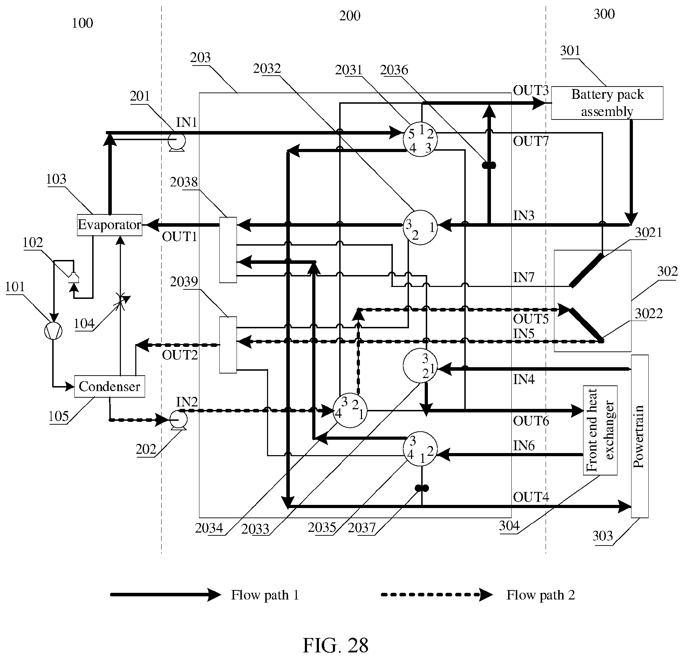

In comparison with the implementation in FIG. 25 and FIG. 26, as shown in FIG. 27 and FIG. 28, as the powertrain 303 continuously generates heat, a temperature of coolant that flows out from the evaporator 103 continuously increases. When the temperature of the coolant that flows out from the evaporator 103 is higher than an ambient temperature plus a threshold due to an excessively large amount of heat generated by the powertrain 303, the compressor 101 is likely to be shut down due to an excessively high exhaust temperature. In this case, there is switching from a mode in FIG. 25 (FIG. 26) to a mode in FIG. 27 (FIG. 28).

In this case, the passenger cabin may be heated, heat generated by the battery pack assembly 301 and the heat generated by the powertrain 303 may be recovered (which is equivalent to cooling the battery pack assembly 301 and the powertrain 303), and the coolant first flows through the heat exchanger of the powertrain 303, and then heat exchange is performed between the coolant that flows through the evaporator 103 and ambient air by using the front end heat exchanger 304, to dissipate heat into the ambient air, so as to reduce the exhaust temperature of the compressor 101 and prevent the compressor 101 from being shut down due to an excessively high exhaust temperature.

For heating of the passenger cabin, refer to the related description in FIG. 23 and FIG. 24. No repeated description is provided herein.

For recovery of the heat generated by the battery pack assembly 301 (in other words, cooling of the battery pack assembly 301), refer to the related description in FIG. 9 and FIG. 10. No repeated description is provided herein.

During recovery of the heat generated by the powertrain 303 (in other words, cooling of the powertrain 303), the controller controls the actuator to communicate the inlet IN1 in the first coolant inlet and outlet with the outlet OUT4 in the powertrain inlet and outlet, communicate the inlet IN4 in the powertrain inlet and outlet with the outlet OUT6 in the front end inlet and outlet, and communicate the inlet IN6 in the front end inlet and outlet with the outlet OUT1 in the first coolant inlet and outlet. Specifically, the controller controls the third terminal of the first valve assembly 2031 to communicate with the fourth terminal, controls the first terminal of the third valve assembly 2033 to communicate with the second terminal, and controls the second terminal of the fifth valve assembly 2035 to communicate with the fourth terminal. The coolant circulates through the evaporator 103, the evaporator branch pump 201, the first valve assembly 2031, the powertrain 303, the third valve assembly 2033, the front end heat exchanger 304, the fifth valve assembly 2035, and the first water tank 2038.

In this implementation, heat exchange may be performed between the coolant that flows through the evaporator 103 and the ambient air by using the front end heat exchanger 304, to dissipate heat into the ambient air, so as to reduce the exhaust temperature of the compressor 101 and prevent the compressor 101 from being shut down due to an excessively high exhaust temperature.

When the ambient temperature in winter continues to decrease, and the battery pack assembly 301 generates a relatively small amount of heat, the passenger cabin needs to be heated, and the battery pack assembly 301 also needs to be heated.

### Normal running 2-1 in winter:

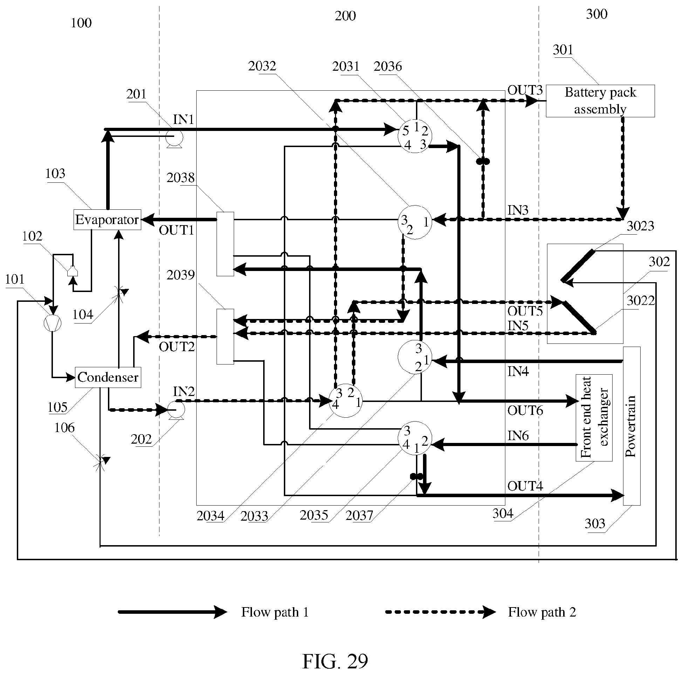

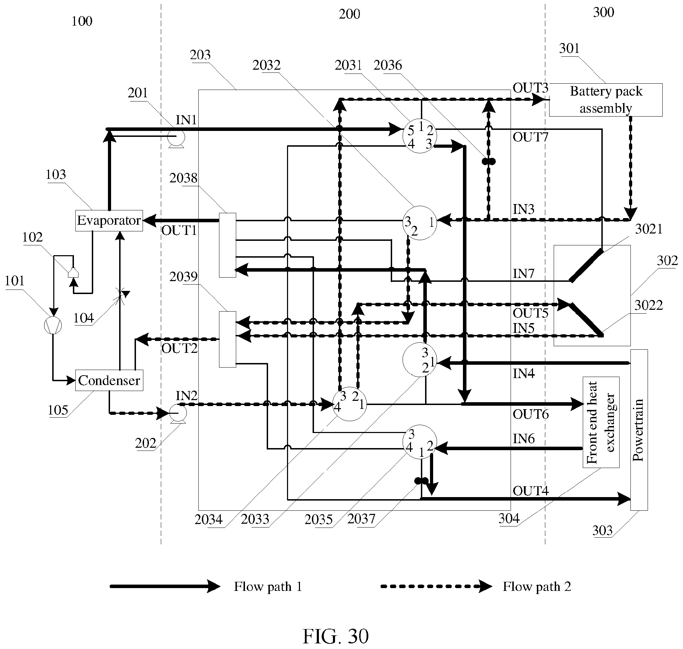

As shown in FIG. 29 and FIG. 30, which are similar to FIG. 23 and FIG. 24, the powertrain 303 generates a very small amount of heat in this case, and therefore a sum of heat generated by the battery pack assembly 301 and the heat generated by the powertrain 303 is still less than a cooling capacity of the heat pump subsystem 100.

In this case, the passenger cabin and the battery pack assembly 301 may be heated, the heat generated by the powertrain 303 may be recovered (which is equivalent to cooling the powertrain 303), and before coolant flows through the heat exchanger of the powertrain 303, heat exchange is performed between the coolant that flows through the evaporator 103 and ambient air by using the front end heat exchanger 304, to absorb heat from the ambient air, to increase an evaporating temperature of refrigerant in the evaporator 103, so as to reduce energy consumption for heating, implement energy saving, and increase endurance mileage.

For heating of the passenger cabin, refer to the related description in FIG. 23 and FIG. 24. No repeated description is provided herein.

During heating of the battery pack assembly 301, the controller controls the actuator to communicate the inlet IN2 in the second coolant inlet and outlet with the outlet OUT3 in the battery pack inlet and outlet, and communicate the outlet OUT2 in the second coolant inlet and outlet with the inlet IN3 in the battery pack inlet and outlet. Specifically, the controller controls the fifth terminal of the second valve assembly 2032 to communicate with the second terminal, controls the second terminal of the fourth valve assembly to communicate with the fourth terminal, and controls the battery pack temperature compensation pump 2036 to run. The coolant circulates through the condenser 105, the condenser branch pump 202, the fourth valve assembly 2034, the heat exchanger of the battery pack assembly 301, the second valve assembly 2032, and the second water tank 2039.

For recovery of the heat generated by the powertrain 303 (in other words, cooling of the powertrain 303), refer to the description in FIG. 23 and FIG. 24. No repeated description is provided herein.

In this implementation, before the coolant absorbs the heat generated by the powertrain 303, heat exchange is performed with the ambient air by using the front end heat exchanger 304, to increase a temperature of the coolant, so as to increase the evaporating temperature of the refrigerant in the evaporator 103. Therefore, energy consumption for heating is reduced, energy saving is implemented, and endurance mileage is increased. In addition, the battery pack assembly 301 is heated, to improve discharge efficiency and increase a service life of the battery pack in a running process, so that a requirement for preheating the battery pack before the battery pack is quickly charged can be met.

### Normal running 2-2 in winter:

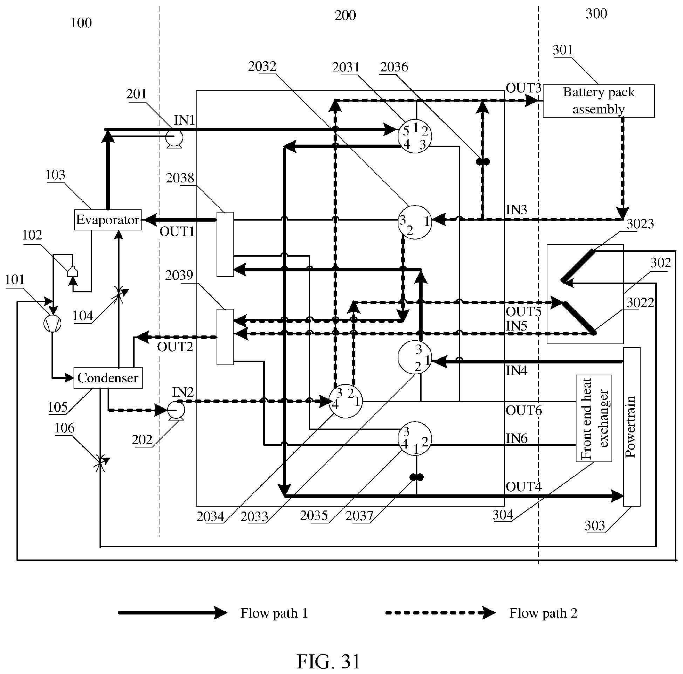

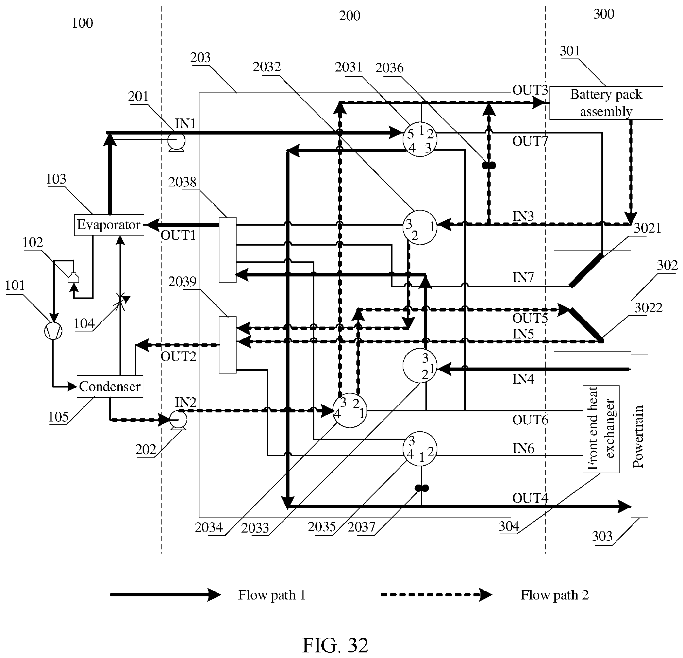

As shown in FIG. 31 and FIG. 32, which are similar to FIG. 25 and FIG. 26, as the powertrain 303 continuously generates heat, a sum of heat generated by the battery pack assembly 301 and the heat generated by the powertrain 303 is approximately equal to a cooling capacity of the heat pump subsystem 100, and a temperature of coolant that flows out from the evaporator 103 continuously increases. When the temperature of the coolant is higher than an ambient temperature, there is switching from a mode in FIG. 29 (FIG. 30) to a mode in FIG. 31 (FIG. 32).

In this case, the passenger cabin and the battery pack assembly 301 may be heated, and the heat generated by the powertrain 303 may be recovered (which is equivalent to cooling the powertrain 303), to reduce energy consumption for heating and increase endurance mileage. There is no need to perform heat exchange between the coolant that flows through the evaporator 103 and ambient air by using the front end heat exchanger 304.

For heating of the passenger cabin, refer to the related description in FIG. 23 and FIG. 24. No repeated description is provided herein.

For heating of the battery pack assembly 301, refer to the related description in FIG. 29 and FIG. 30. No repeated description is provided herein.

For recovery of the heat generated by the powertrain 303 (in other words, cooling of the powertrain 303), refer to the description in FIG. 13 and FIG. 14. No repeated description is provided herein.

In this implementation, the coolant does not need to dissipate heat into the ambient air through the front end heat exchanger 304, to further increase an evaporating temperature of coolant in the evaporator 103. Therefore, while a pressure ratio of the compressor is reduced, energy consumption for heating can be reduced, and endurance mileage can be increased.

### Normal running 2-3 in winter:

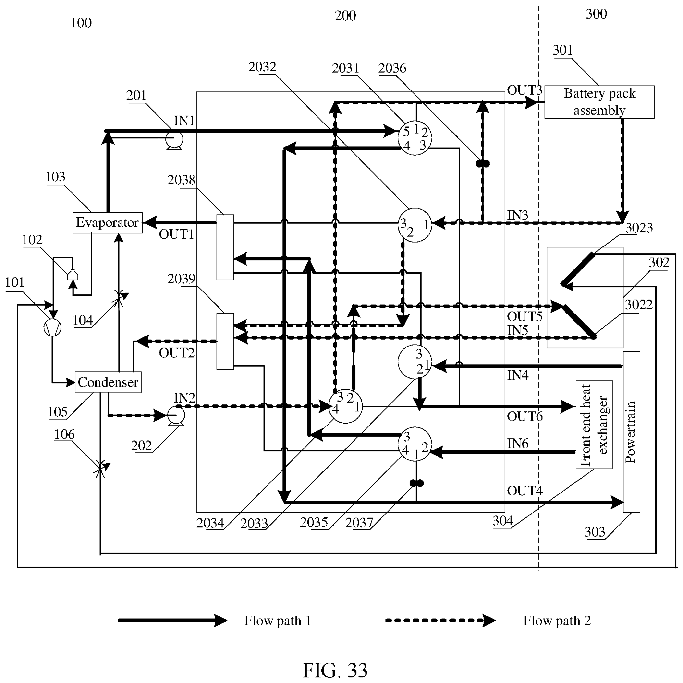

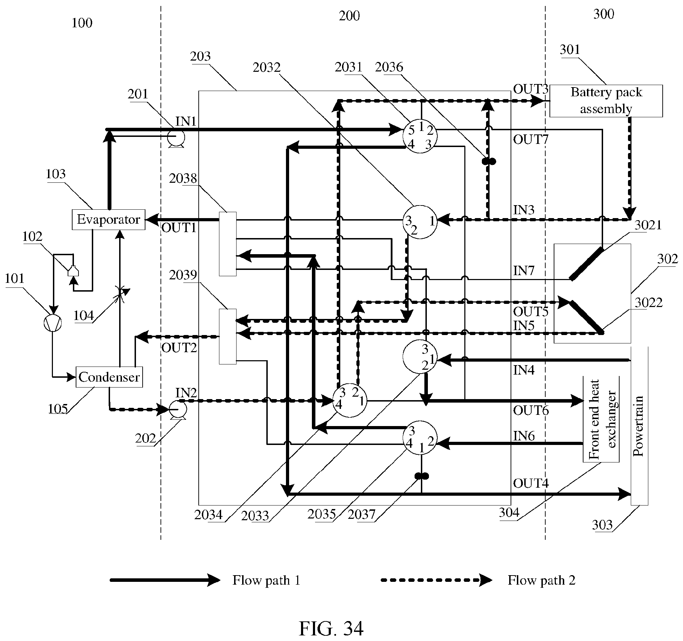

As shown in FIG. 33 and FIG. 34, which are similar to FIG. 27 and FIG. 28, as the powertrain 303 continuously generates heat, a temperature of coolant that flows out from the evaporator 103 continuously increases. When the temperature of the coolant that flows out from the evaporator 103 is higher than an ambient temperature plus a threshold due to an excessively large amount of heat generated by the powertrain 303, the compressor 101 is likely to be shut down due to an excessively high exhaust temperature. In this case, there is switching from a mode in FIG. 31 (FIG. 32) to a mode in FIG. 33 (FIG. 34).

In this case, the passenger cabin and the battery pack assembly 301 may be heated, the heat generated by the powertrain 303 may be recovered (which is equivalent to cooling the powertrain 303), and the coolant first flows through the heat exchanger of the powertrain 303, and then heat exchange is performed between the coolant that flows through the evaporator 103 and ambient air by using the front end heat exchanger 304, to dissipate heat into the ambient air, so as to reduce the exhaust temperature of the compressor 101 and prevent the compressor 101 from being shut down due to an excessively high exhaust temperature.

For heating of the passenger cabin, refer to the related description in FIG. 23 and FIG. 24. No repeated description is provided herein.

For heating of the battery pack assembly 301, refer to the related description in FIG. 29 and FIG. 30. No repeated description is provided herein.

For recovery of the heat generated by the powertrain 303 (in other words, cooling of the powertrain 303), refer to the description in FIG. 27 and FIG. 28. No repeated description is provided herein.

In this implementation, heat exchange may be performed between the coolant that flows through the evaporator 103 and the ambient air by using the front end heat exchanger 304, to dissipate heat into the ambient air, so as to reduce the exhaust temperature of the compressor 101 and prevent the compressor 101 from being shut down due to an excessively high exhaust temperature.

A human body exhales moisture in the passenger cabin, and therefore dehumidification may be implemented by condensing moisture in air through cooling. However, comfort of a passenger is reduced if cooling is performed in winter. Therefore, non-cooling dehumidification may be performed in winter. That is, when the passenger cabin is cooled by using the cooling heat exchanger 3021 of the passenger cabin or the direct expansion evaporator 3023, the passenger cabin is heated by using the heating heat exchanger 3022 of the passenger cabin.

### Non-cooling dehumidification 1-1 in winter:

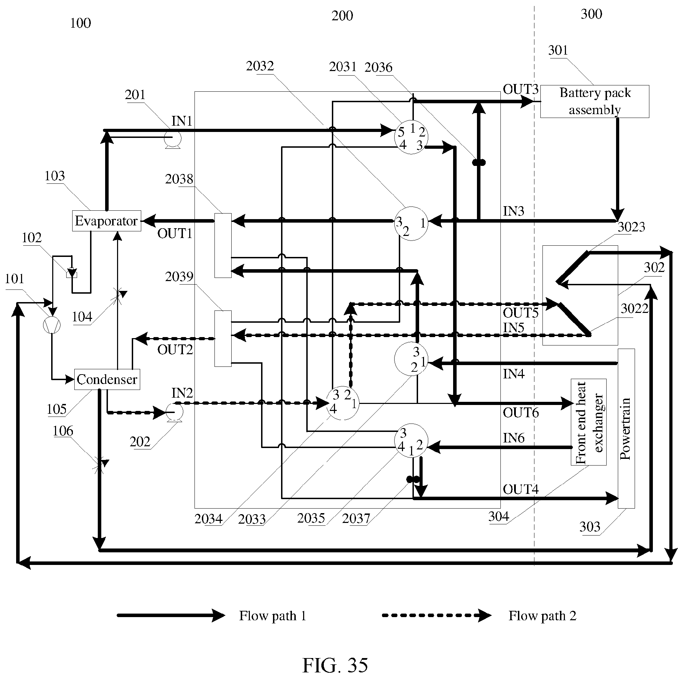

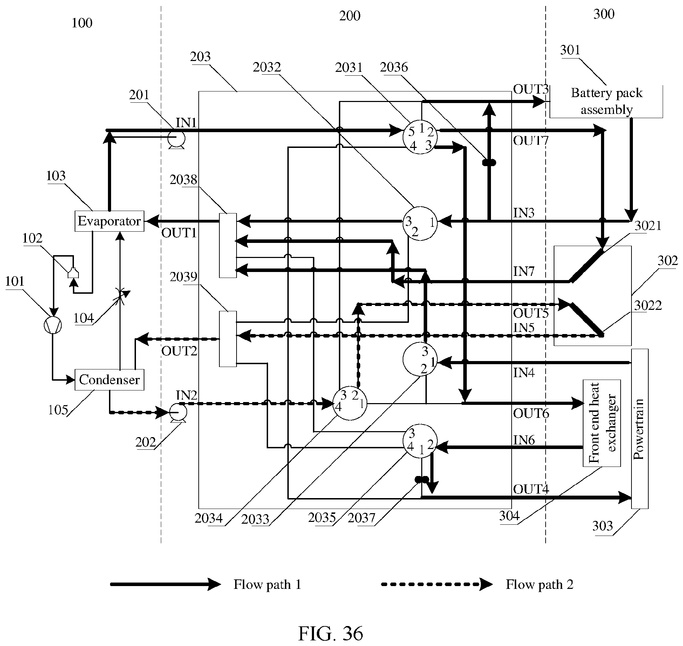

As shown in FIG. 35 and FIG. 36, which are similar to FIG. 23 and FIG. 24, the powertrain 303 generates a very small amount of heat in this case, and therefore a sum of heat generated by the battery pack assembly 301 and the heat generated by the powertrain 303 is still less than a cooling capacity of the heat pump subsystem 100.

In this case, the passenger cabin may be simultaneously cooled and heated, the heat generated by the battery pack assembly 301 and the heat generated by the powertrain 303 may be recovered (which is equivalent to cooling the battery pack assembly 301 and the powertrain 303), and before coolant flows through the heat exchanger of the powertrain 303, heat exchange is performed between the coolant that flows through the evaporator 103 and ambient air by using the front end heat exchanger 304, to absorb heat from the ambient air, to increase an evaporating temperature of refrigerant in the evaporator 103, so as to reduce energy consumption for heating, implement energy saving, and increase endurance mileage.

For cooling of the passenger cabin, refer to the related description in FIG. 9 and FIG. 10. No repeated description is provided herein.

For heating of the passenger cabin, refer to the related description in FIG. 23 and FIG. 24. No repeated description is provided herein.

For recovery of the heat generated by the battery pack assembly 301 and the heat generated by the powertrain 303 (which is equivalent to cooling the battery pack assembly 301 and the powertrain 303), refer to the description in FIG. 23 and FIG. 24. No repeated description is provided herein.

In this implementation, before the coolant absorbs the heat generated by the powertrain 303, heat exchange is performed with the ambient air by using the front end heat exchanger 304, to increase a temperature of the coolant, so as to increase the evaporating temperature of the refrigerant in the evaporator 103. Therefore, energy consumption for heating is reduced, energy saving is implemented, and endurance mileage is increased.

### Non-cooling dehumidification 1-2 in winter:

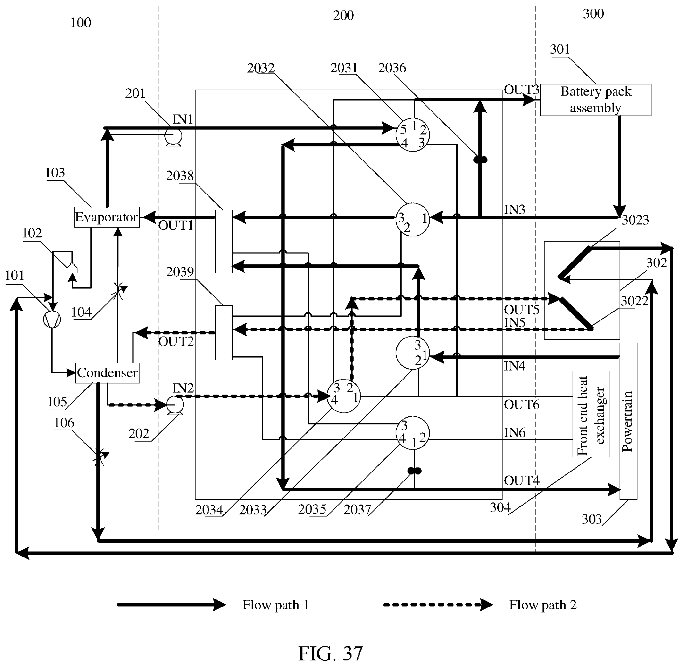

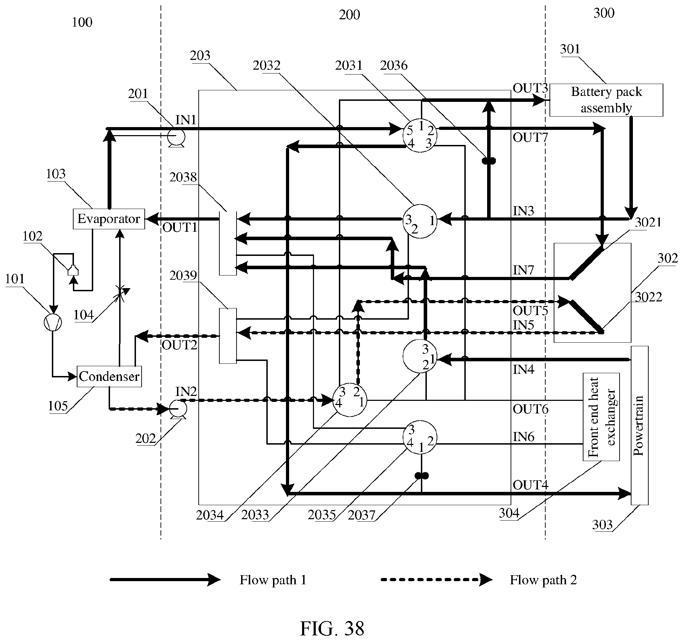

As shown in FIG. 37 and FIG. 38, which are similar to FIG. 25 and FIG. 26, as the powertrain 303 continuously generates heat, a sum of heat generated by the battery pack assembly 301 and the heat generated by the powertrain 303 is approximately equal to a cooling capacity of the heat pump subsystem 100, and a temperature of coolant that flows out from the evaporator 103 continuously increases. When the temperature of the coolant is higher than an ambient temperature, there is switching from a mode in FIG. 35 (FIG. 36) to a mode in FIG. 37 (FIG. 38).

In this case, the passenger cabin may be simultaneously cooled and heated, and the heat generated by the battery pack assembly 301 and the heat generated by the powertrain 303 may be recovered (which is equivalent to cooling the battery pack assembly 301 and the powertrain 303), to reduce energy consumption for heating and increase endurance mileage. There is no need to perform heat exchange between the coolant that flows through the evaporator 103 and ambient air by using the front end heat exchanger 304.

For cooling of the passenger cabin, refer to the related description in FIG. 9 and FIG. 10. No repeated description is provided herein.

For heating of the passenger cabin, refer to the related description in FIG. 23 and FIG. 24. No repeated description is provided herein.

For recovery of the heat generated by the battery pack assembly 301 (in other words, cooling of the battery pack assembly 301), refer to the related description in FIG. 9 and FIG. 10. No repeated description is provided herein.

For recovery of the heat generated by the powertrain 303 (in other words, cooling of the powertrain 303), refer to the related description in FIG. 13 and FIG. 14. No repeated description is provided herein.

In this implementation, the coolant does not need to dissipate heat into the ambient air through the front end heat exchanger 304, to further increase an evaporating temperature of coolant in the evaporator 103. Therefore, while a pressure ratio of the compressor is reduced, energy consumption for heating can be reduced, and endurance mileage can be increased.

### Non-cooling dehumidification 1-3 in winter:

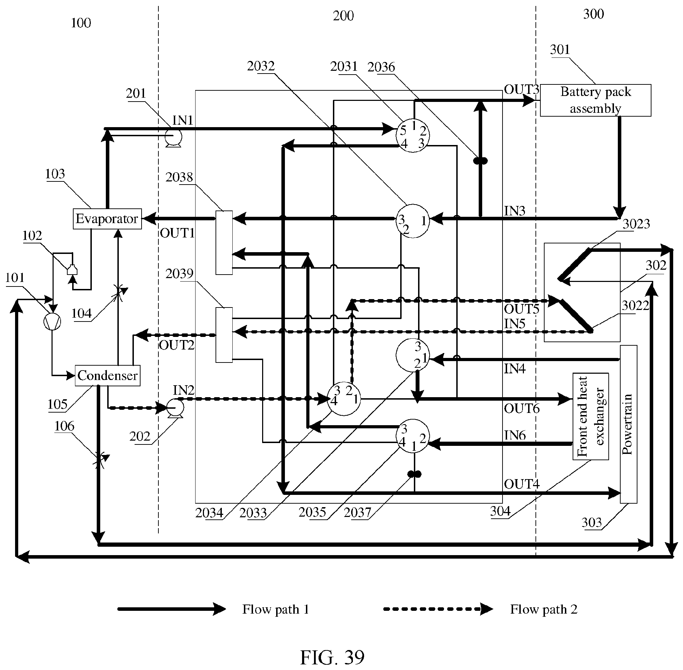

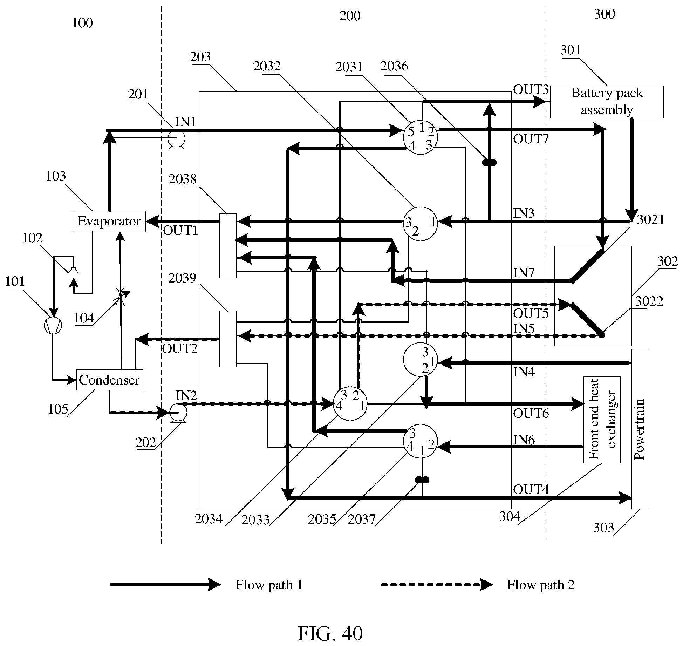

As shown in FIG. 39 and FIG. 40, which are similar to FIG. 27 and FIG. 28, as the powertrain 303 continuously generates heat, a temperature of coolant that flows out from the evaporator 103 continuously increases. When the temperature of the coolant that flows out from the evaporator 103 is higher than an ambient temperature plus a threshold due to an excessively large amount of heat generated by the powertrain 303, the compressor 101 is likely to be shut down due to an excessively high exhaust temperature. In this case, there is switching from a mode in FIG. 37 (FIG. 38) to a mode in FIG. 39 (FIG. 40).

In this case, the passenger cabin may be simultaneously cooled and heated, heat generated by the battery pack assembly 301 and the heat generated by the powertrain 303 may be recovered (which is equivalent to cooling the battery pack assembly 301 and the powertrain 303), and the coolant first flows through the heat exchanger of the powertrain 303, and then heat exchange is performed between the coolant that flows through the evaporator 103 and ambient air by using the front end heat exchanger 304, to dissipate heat into the ambient air, so as to reduce the exhaust temperature of the compressor 101 and prevent the compressor 101 from being shut down due to an excessively high exhaust temperature.

For cooling of the passenger cabin, refer to the related description in FIG. 9 and FIG. 10. No repeated description is provided herein.

For heating of the passenger cabin, refer to the related description in FIG. 23 and FIG. 24. No repeated description is provided herein.

For recovery of the heat generated by the battery pack assembly 301 (in other words, cooling of the battery pack assembly 301), refer to the related description in FIG. 9 and FIG. 10. No repeated description is provided herein.

For recovery of the heat generated by the powertrain 303 (in other words, cooling of the powertrain 303), refer to the related description in FIG. 27 and FIG. 28. No repeated description is provided herein.

In this implementation, heat exchange may be performed between the coolant that flows through the evaporator 103 and the ambient air by using the front end heat exchanger 304, to dissipate heat into the ambient air, so as to reduce the exhaust temperature of the compressor 101 and prevent the compressor 101 from being shut down due to an excessively high exhaust temperature.

When the ambient temperature in winter continues to decrease, and the battery pack assembly 301 generates a relatively small amount of heat, the passenger cabin needs to be simultaneously cooled and heated, and the battery pack assembly 301 also needs to be heated.

### Non-cooling dehumidification 2-1 in winter:

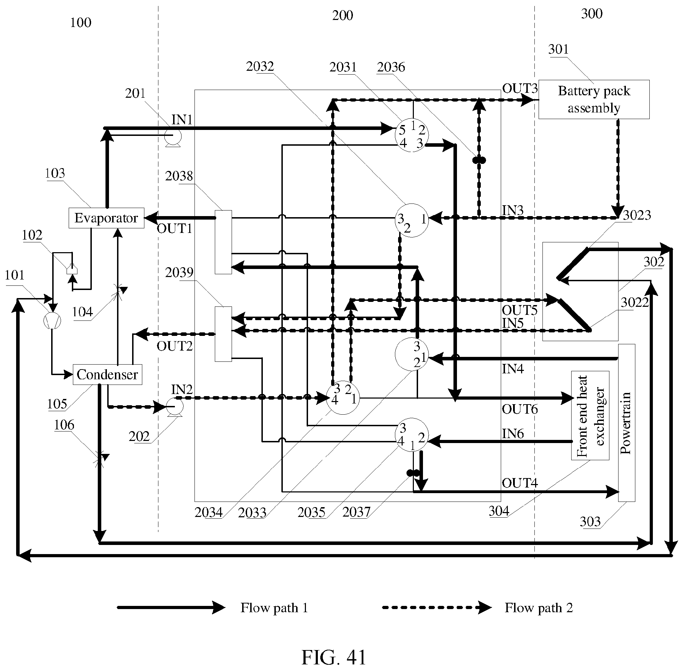

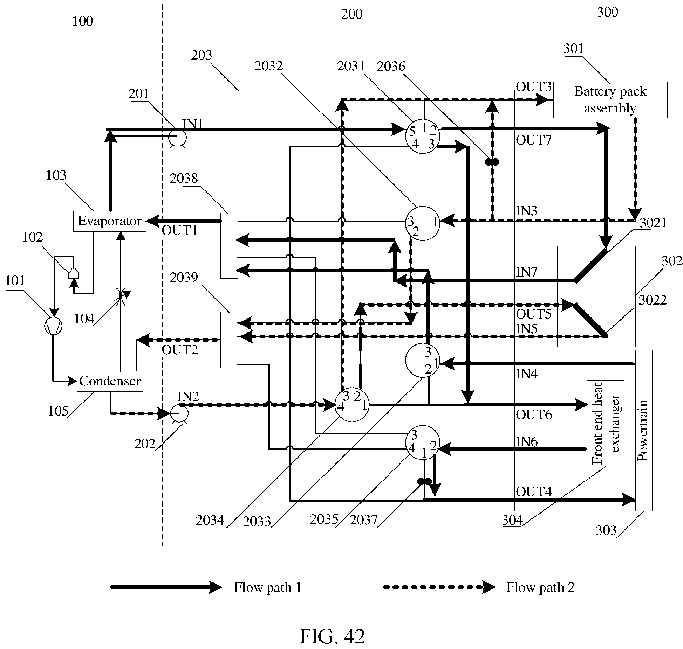

As shown in FIG. 41 and FIG. 42, which are similar to FIG. 29 and FIG. 30, the powertrain 303 generates a very small amount of heat in this case, and therefore a sum of heat generated by the battery pack assembly 301 and the heat generated by the powertrain 303 is still less than a cooling capacity of the heat pump subsystem 100.

In this case, the passenger cabin may be simultaneously cooled and heated, the battery pack assembly 301 may be heated, the heat generated by the powertrain 303 may be recovered (which is equivalent to cooling the powertrain 303), and before coolant flows through the heat exchanger of the powertrain 303, heat exchange is performed between the coolant that flows through the evaporator 103 and ambient air by using the front end heat exchanger 304, to absorb heat from the ambient air, to increase an evaporating temperature of refrigerant in the evaporator 103, so as to reduce energy consumption for heating and increase endurance mileage.

For cooling of the passenger cabin, refer to the related description in FIG. 9 and FIG. 10. No repeated description is provided herein.

For heating of the passenger cabin, refer to the related description in FIG. 23 and FIG. 24. No repeated description is provided herein.

For heating of the battery pack assembly 301, refer to the related description in FIG. 29 and FIG. 30. No repeated description is provided herein.

For recovery of the heat generated by the powertrain 303 (in other words, cooling of the powertrain 303), refer to the description in FIG. 23 and FIG. 24. No repeated description is provided herein.

In this implementation, before the coolant absorbs the heat generated by the powertrain 303, heat exchange is performed with the ambient air by using the front end heat exchanger 304, to increase a temperature of the coolant, so as to increase the evaporating temperature of the refrigerant in the evaporator 103. Therefore, energy consumption for heating is reduced, and endurance mileage is increased.

### Non-cooling dehumidification 2-2 in winter:

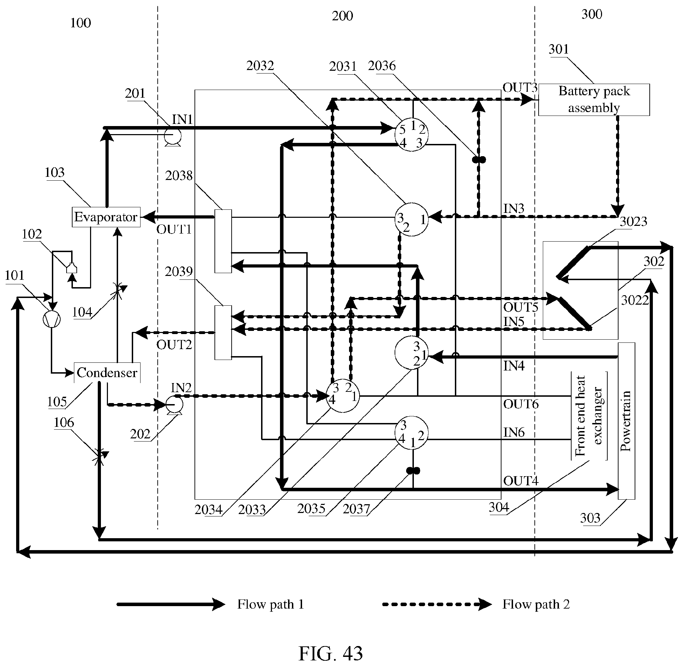

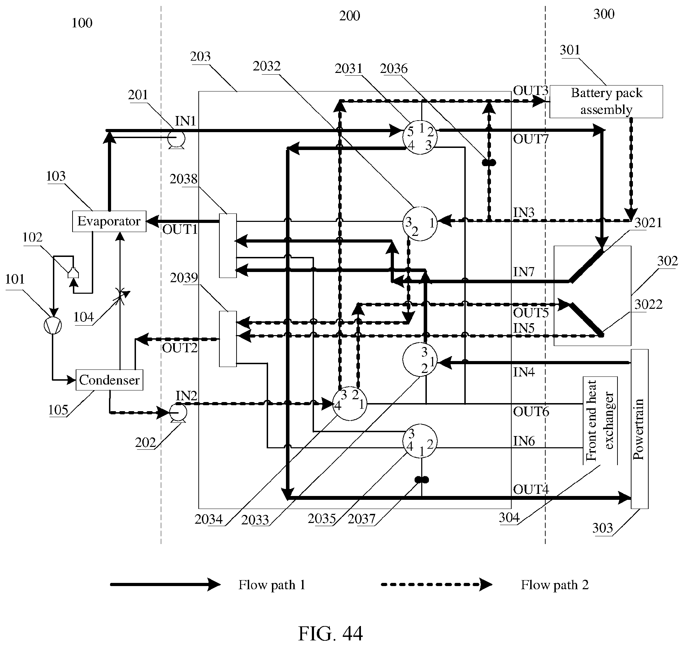

As shown in FIG. 43 and FIG. 44, which are similar to FIG. 31 and FIG. 32, as the powertrain 303 continuously generates heat, a sum of heat generated by the battery pack assembly 301 and the heat generated by the powertrain 303 is approximately equal to a cooling capacity of the heat pump subsystem 100, and a temperature of coolant that flows out from the evaporator 103 continuously increases. When the temperature of the coolant is higher than an ambient temperature, there is switching from a mode in FIG. 41 (FIG. 42) to a mode in FIG. 43 (FIG. 44).

In this case, the passenger cabin may be simultaneously cooled and heated, the battery pack assembly 301 may be heated, and the heat generated by the powertrain 303 may be recovered (which is equivalent to cooling the powertrain 303), to reduce energy consumption for heating and increase endurance mileage. There is no need to perform heat exchange between the coolant that flows through the evaporator 103 and ambient air by using the front end heat exchanger 304.

For cooling of the passenger cabin, refer to the related description in FIG. 9 and FIG. 10. No repeated description is provided herein.

For heating of the passenger cabin, refer to the related description in FIG. 23 and FIG. 24. No repeated description is provided herein.

For heating of the battery pack assembly 301, refer to the related description in FIG. 29 and FIG. 30. No repeated description is provided herein.

For recovery of the heat generated by the powertrain 303 (in other words, cooling of the powertrain 303), refer to the description in FIG. 13 and FIG. 14. No repeated description is provided herein.

In this implementation, the coolant does not need to dissipate heat into the ambient air through the front end heat exchanger 304, to further increase an evaporating temperature of coolant in the evaporator 103. Therefore, while a pressure ratio of the compressor is reduced, energy consumption for heating can be reduced, and endurance mileage can be increased.

### Non-cooling dehumidification 2-3 in winter:

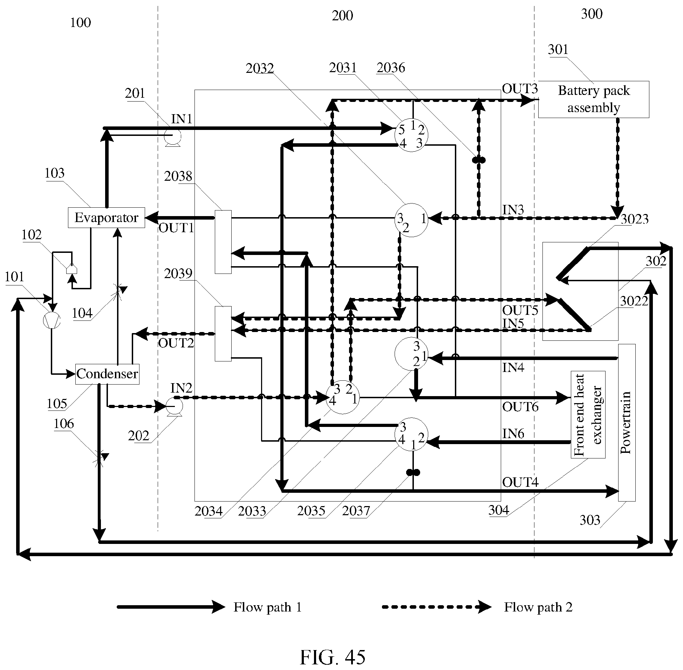

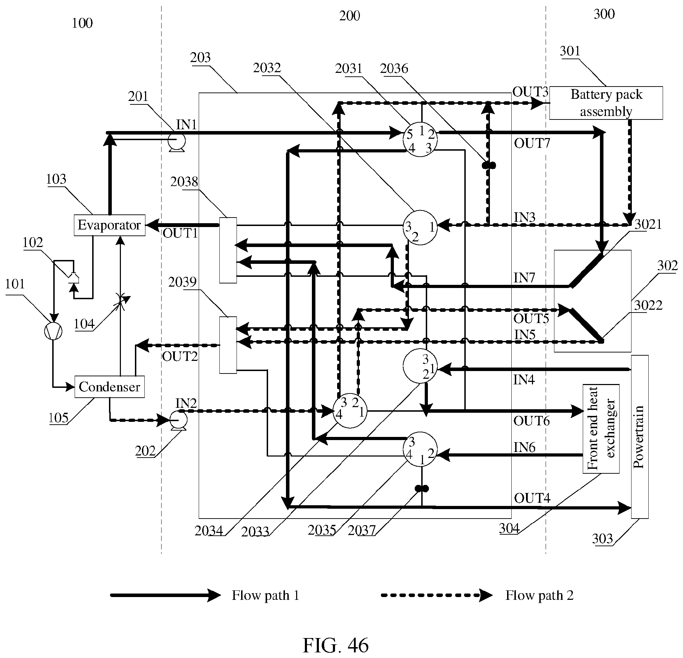

As shown in FIG. 45 and FIG. 46, which are similar to FIG. 33 and FIG. 34, as the powertrain 303 continuously generates heat, a temperature of coolant that flows out from the evaporator 103 continuously increases. When the temperature of the coolant that flows out from the evaporator 103 is higher than an ambient temperature plus a threshold due to an excessively large amount of heat generated by the powertrain 303, the compressor 101 is likely to be shut down due to an excessively high exhaust temperature. In this case, there is switching from a mode in FIG. 31 (FIG. 32) to a mode in FIG. 33 (FIG. 34).

In this case, the passenger cabin may be simultaneously cooled and heated, the battery pack assembly 301 may be heated, and the heat generated by the powertrain 303 may be recovered (which is equivalent to cooling the powertrain 303), and the coolant first flows through the heat exchanger of the powertrain 303, and then heat exchange is performed between the coolant that flows through the evaporator 103 and ambient air by using the front end heat exchanger 304, to dissipate heat into the ambient air, so as to reduce the exhaust temperature of the compressor 101 and prevent the compressor 101 from being shut down due to an excessively high exhaust temperature.

For cooling of the passenger cabin, refer to the related description in FIG. 9 and FIG. 10. No repeated description is provided herein.

For heating of the passenger cabin, refer to the related description in FIG. 23 and FIG. 24. No repeated description is provided herein.

For heating of the battery pack assembly 301, refer to the related description in FIG. 29 and FIG. 30. No repeated description is provided herein.

For recovery of the heat generated by the powertrain 303 (in other words, cooling of the powertrain 303), refer to the description in FIG. 27 and FIG. 28. No repeated description is provided herein.

In this implementation, heat exchange may be performed between the coolant that flows through the evaporator 103 and the ambient air by using the front end heat exchanger 304, to dissipate heat into the ambient air, so as to reduce the exhaust temperature of the compressor 101 and prevent the compressor 101 from being shut down due to an excessively high exhaust temperature.

### Defrosting of the front end heat exchanger in winter:

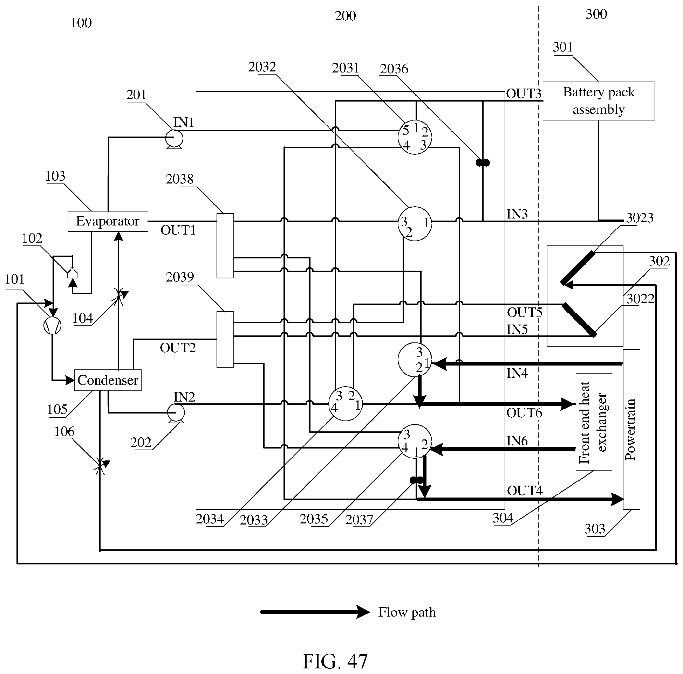

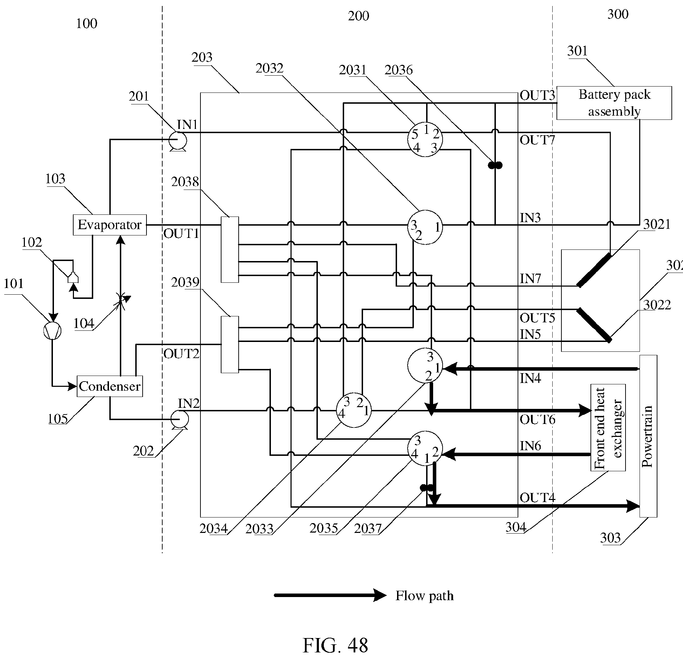

In a running process in winter, when an outdoor environment is within a temperature and humidity range of a frost area, as shown in FIG. 23 (FIG. 24), FIG. 29 (FIG. 30), FIG. 35 (FIG. 36), and FIG. 41 (FIG. 42), if heat exchange is performed between low-temperature coolant and ambient air in the front end heat exchanger 304, an airside fin of the front end heat exchanger 304 is likely to be frosted. To reduce energy consumption for defrosting and increase endurance mileage, defrosting may be performed by using a relatively high temperature of the ambient air in a manner shown in FIG. 25 (FIG. 26), FIG. 31 (FIG. 32). FIG. 37 (FIG. 38), and FIG. 43 (FIG. 44). In this case, there is a relatively long defrosting time. Alternatively, defrosting may be performed by using the heat generated by the powertrain 303 in a manner shown in FIG. 27 (FIG. 28), FIG. 33 (FIG. 34), FIG. 39 (FIG. 40), and FIG. 45 (FIG. 46). In this case, there is a relatively short defrosting time. When the passenger cabin reaches a target temperature and the battery pack assembly 301 does not need to be cooled or heated, there may be switching to a mode shown in FIG. 47 or FIG. 48. In this case, the front end heat exchanger 304 is defrosted by using the heat generated by the powertrain 303, and the controller controls the actuator to communicate the inlet IN6 in the front end inlet and outlet with the outlet OUT4 in the powertrain inlet and outlet, and communicate the outlet OUT6 in the front end inlet and outlet with the inlet IN4 in the powertrain inlet and outlet.

As shown in FIG. 47 and FIG. 48, the controller controls the first terminal of the third valve assembly 2033 to communicate with the second terminal, controls the first terminal of the fifth valve assembly 2035 to communicate with the second terminal, and controls the powertrain circulation pump 2037 to run.

In this implementation, when the front end heat exchanger 304 is defrosted, the heat pump subsystem 100 does not need to work. Therefore, energy consumption can be reduced, and endurance mileage can be increased. Defrosting is performed by using residual heat of the powertrain 303, and defrosting can be performed without stopping a machine. Therefore, while thermal comfort of the passenger cabin in winter is ensured, defrosting is implemented with low energy consumption.

### Parking and charging in winter:

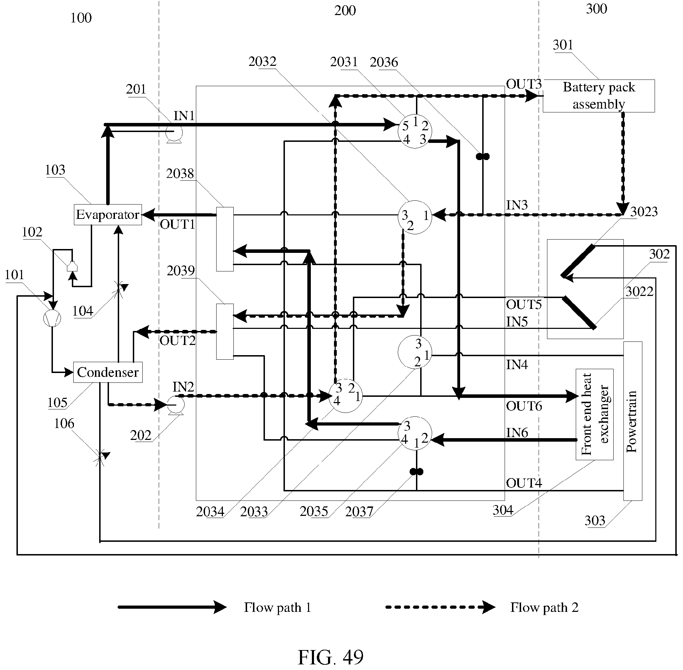

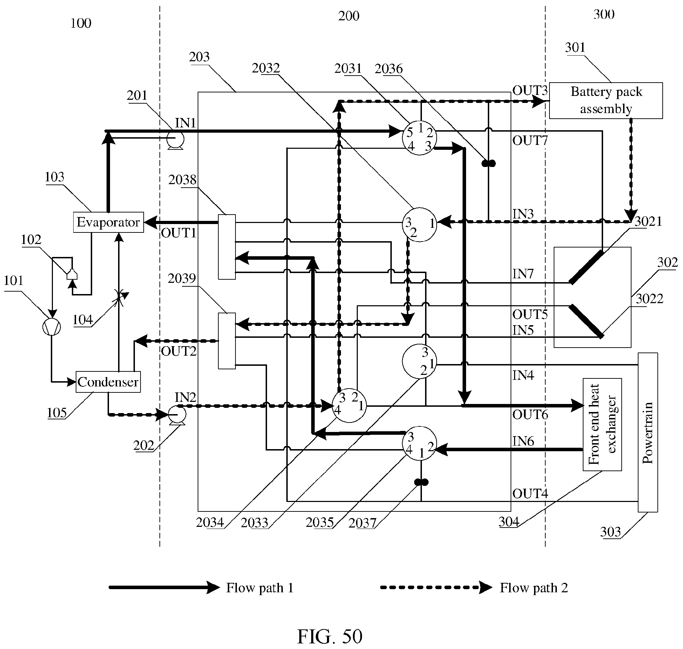

As shown in FIG. 49 and FIG. 50, during parking and charging in winter, the battery pack assembly 301 may be heated by running the heat pump subsystem 100. the evaporator branch pump 201, and the condenser branch pump 202, to reduce a charging time.

During heating of the battery pack assembly 301, the controller controls the battery pack temperature compensation pump 2036 and the powertrain circulation pump 2037 to stop running. For other content, refer to the description in FIG. 29 and FIG. 30. No repeated description is provided herein. This is because when the battery pack is charged in winter, the battery pack generates a very large amount of heat, and the battery pack does not need to output energy to the outside. Therefore, there is no need to use the battery pack temperature compensation pump 2036 to mix coolant that flows out from the heat exchanger of the battery pack and coolant that flows to the battery pack to increase a temperature of the coolant that flows to the battery pack, and there is no need to ensure that the battery pack works at an optimal working temperature.

The controller further controls the actuator to communicate the inlet IN1 in the first coolant inlet and outlet with the outlet OUT6 in the front end inlet and outlet, and communicate the outlet OUT1 in the first coolant inlet and outlet with the inlet IN6 in the front end inlet and outlet. Heat exchange is performed between the coolant that flows through the evaporator 103 and ambient air by using the front end heat exchanger 304, to absorb heat from the ambient air, to increase an evaporating temperature of refrigerant in the evaporator 103, so as to reduce energy consumption for heating and increase endurance mileage.

Specifically, the controller controls the third terminal of the first valve assembly 2031 to communicate with the fifth terminal, and controls the second terminal of the fifth valve assembly 2035 to communicate with the fifth terminal.

In comparison with electrical heating, in this implementation, energy consumption for heating can be reduced, and endurance mileage can be increased.

In the valve assembly apparatus and the control method provided in embodiments of this application, a full indirect cooling technology is used, a cooling capacity of the evaporator and a heating capacity of the condenser in the heat pump subsystem are conducted to a thermal management component terminal subsystem such as the powertrain, the passenger cabin, or the front end heat exchanger, and refrigerant does not need to be delivered to the thermal management component terminal subsystem, to ensure that the refrigerant and the passenger cabin are physically isolated, simplify a structure of the heat pump subsystem, reduce a quantity of high-pressure stop valves, and reduce refrigerant charge of the heat pump subsystem. Therefore, costs of performing cooling or heating in a vehicle by using a heat pump can be greatly reduced.

In the conventional technology, each of the battery pack assembly, the powertrain, and the passenger cabin needs one front end heat exchanger. In embodiments of this application, a quantity of cores in the front end heat exchanger is decreased from three cores to one core, to reduce costs and simplify mutual impact and a collaborative control policy.

A heat pump heating technology with low energy consumption may be used for heating of both the passenger cabin and the battery pack in winter. In this way, heating efficiency can be effectively improved, energy consumption in winter can be reduced, and endurance mileage can be increased.

In spring and autumn, natural heat dissipation may be independently performed on the battery pack, the battery pack and the powertrain may be connected in series for natural heat dissipation, and natural heat dissipation may be independently performed on the powertrain. Therefore, energy consumption for cooling is reduced, and endurance mileage is increased.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. In addition, the displayed or discussed mutual couplings or direct couplings or communication connections may be implemented through some interfaces. The indirect couplings or communication connections between the devices or units may be implemented in electrical, mechanical, or other forms

All or a part of the foregoing embodiments may be implemented by using software, hardware, firmware, or any combination thereof. When a software program is used to implement embodiments, all or some of embodiments may be implemented in a form of a computer program product. The computer program product includes one or more computer instructions. When computer program instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The available medium may be a magnetic medium (for example, a floppy disk, a hard disk, or a magnetic tape), an optical medium (for example, a DVD), a semiconductor medium (for example, a solid-state disk (Solid State Disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the scope of this application Therefore, the protection scope of this invention shall be defined by the protection scope of the claims.

## Claims

1. A valve assembly apparatus (203), comprising a controller, an actuator, a first water tank (2038) and a second water tank (2039), a first inlet and outlet set, and a second inlet and outlet set, wherein the first inlet and outlet set comprises a first coolant inlet and outlet (IN1,OUT1) and a second coolant inlet and outlet (IN2,OUT2); the second inlet and outlet set comprises: a powertrain inlet and outlet (IN4,OUT4), a passenger cabin heating inlet and outlet (IN5,OUT5) and a passenger cabin cooling inlet and outlet (IN7,OUT7), and a front end inlet and outlet (IN6,OUT6); and an inlet in the inlet and outlet in each of the first inlet and outlet set and the second inlet and outlet set is configured to allow inflow of coolant, and an outlet in the inlet and outlet in each of the first inlet and outlet set and the second inlet and outlet set is configured to allow outflow of coolant;
an inlet (IN1) in the first coolant inlet and outlet is configured to be connected to a coolant outlet of an evaporator (103) in a heat pump subsystem via an evaporator branch pump (201), and an outlet (OUT1) in the first coolant inlet and outlet is configured to be connected to a coolant inlet of the evaporator (103); and an inlet (IN2) in the second coolant inlet and outlet is configured to be connected to a coolant outlet of a condenser (105) in the heat pump subsystem, wherein the inlet (IN1) in the first coolant inlet and outlet is connected to a fifth terminal of the first valve assembly (2031), and the inlet (IN2) in the second coolant inlet and outlet is connected to a fourth terminal of the fourth valve assembly (2034), and an outlet (OUT2) in the second coolant inlet and outlet is configured to be connected to a coolant inlet of the condenser (105), wherein coolant flows through the evaporator (103) and the condenser (105), wherein the actuator (203) comprises a first valve assembly (2031), a second valve assembly (2032), a third valve assembly (2033), a fourth valve assembly (2034), and a fifth valve assembly (2035);
an outlet (OUT4) in the powertrain inlet and outlet is configured to be connected to an inlet of a heat exchanger of a powertrain (303), and an inlet (IN4) in the powertrain inlet and outlet is configured to be connected to an outlet of the heat exchanger of the powertrain (303), wherein the outlet (OUT4) in the powertrain inlet and outlet is connected to a fourth terminal of the first valve assembly (2031) and a first terminal of the fifth valve assembly (2035), and the inlet (IN4) in the powertrain inlet and outlet is connected to a first terminal of the third valve assembly (2033) ;
an outlet (OUT5) in the passenger cabin heating inlet and outlet is configured to be connected to an inlet of a heating heat exchanger (3022) of a passenger cabin, and an inlet (IN5) in the passenger cabin heating inlet and outlet is configured to be connected to an outlet of the heating heat exchanger (3022) of the passenger cabin, and an outlet (OUT7) in the passenger cabin cooling inlet and outlet is configured to be connected to an inlet of a cooling heat exchanger (3021) of the passenger cabin, and an inlet (IN7) in the passenger cabin cooling inlet and outlet is configured to be connected to an outlet of the cooling heat exchanger (3021), wherein the outlet (OUT5) in the passenger cabin heating inlet and outlet is connected to a second terminal of the fourth valve assembly (2034), and the inlet (IN5) in the passenger cabin heating inlet and outlet is connected to the second water tank (2039), wherein the outlet (OUT7) in the passenger cabin cooling inlet and outlet is connected to a second terminal of the first valve assembly (2031), and the inlet (IN7) in the passenger cabin cooling inlet and outlet is connected to a first water tank (2038), and wherein the first water tank (2038) is configured to store coolant that flows through the evaporator (103), and the second water tank (2039) is configured to store coolant that flows through the condenser (105);
an outlet (OUT6) in the front end inlet and outlet is configured to be connected to an inlet of a front end heat exchanger (304), and an inlet (IN6) in the front end inlet and outlet is configured to be connected to an outlet of the front end heat exchanger (304), wherein the outlet (OUT6) in the front end inlet and outlet is connected to a third terminal of the first valve assembly (2031), a second terminal of the third valve assembly (2033), and a first terminal of the fourth valve assembly (2034), and the inlet (IN6) in the front end inlet and outlet is connected to a second terminal of the fifth valve assembly (2035);
the first water tank (2038) is connected to a third terminal of the second valve assembly (2032), a third terminal of the fifth valve assembly (2035), and a third terminal of the third valve assembly (2033), the second water tank (2039) is further connected to a second terminal of the second valve assembly (2032), the fourth terminal of the first valve assembly (2031), and a fourth terminal of the fifth valve assembly (2035), a first terminal of the first valve assembly (2031) is connected to a third terminal of the fourth valve assembly (2034); and
the controller is configured to control, based on a working condition of a vehicle cooling system, the actuator to communicate at least one inlet in the first inlet and outlet set with at least one outlet in the second inlet and outlet set, and communicate at least one outlet in the first inlet and outlet set with at least one inlet in the second inlet and outlet set, and control the actuator to communicate the inlet (IN1) in the first coolant inlet and outlet with the outlet (OUT7) in the passenger cabin cooling inlet and outlet, and communicate the outlet (OUT1) in the first coolant inlet and outlet with the inlet (IN7) in the passenger cabin cooling inlet and outlet, wherein the controller is configured to control the fifth terminal of the first valve assembly (2031) to communicate with the second terminal of the first valve assembly (2031) to circulate coolant through the evaporator (103). the evaporator branch pump (201), the first valve assembly (2031), the cooling heat exchanger (3021) of the passenger cabin, and the first water tank (2038).

2. The valve assembly apparatus according to claim 1, wherein the valve assembly apparatus further comprises a powertrain circulation pump (2037), and the first terminal of the fifth valve assembly (2035) is connected to the outlet in the powertrain inlet and outlet by using the powertrain circulation pump (2037).

3. The valve assembly apparatus according to claim 1 or 2, wherein the second inlet and outlet set further comprises a battery pack inlet and outlet (IN3,OUT3);
an outlet in the battery pack inlet and outlet is connected to the first terminal of the first valve assembly (2031) and the third terminal of the fourth valve assembly (2034), and an inlet (IN3) in the battery pack inlet and outlet is connected to a first terminal of the second valve assembly (2032).

4. The valve assembly apparatus according to claim 3, wherein the valve assembly apparatus further comprises a battery pack temperature compensation pump (2036),
and the outlet in the battery pack inlet and outlet is further connected to the inlet in the battery pack inlet and outlet by using the battery pack temperature compensation pump.

5. The valve assembly apparatus according to any one of claims 1 to 2, wherein the second inlet and outlet set further comprises a battery pack inlet and outlet, an outlet (OUT3) in the battery pack inlet and outlet is configured to be connected to an inlet of a heat exchanger of a battery pack assembly (301), and an inlet (IN3) in the battery pack inlet and outlet is configured to be connected to an outlet of the heat exchanger of the battery pack assembly.

6. The valve assembly apparatus according to any one of claims 1 to 5, wherein the controller is configured to:
when the working condition of the vehicle cooling system comprises heating the passenger cabin, control the actuator to communicate the inlet (IN2) in the second coolant inlet and outlet with the outlet (OUT5) in the passenger cabin heating inlet and outlet, and communicate the outlet (OUT2) in the second coolant inlet and outlet with the inlet (IN5) in the passenger cabin heating inlet and outlet.

7. The valve assembly apparatus according to claim 5, wherein the controller is configured to:
when the working condition of the vehicle cooling system comprises cooling the battery pack assembly, control the actuator to communicate the inlet (IN1) in the first coolant inlet and outlet with the outlet (OUT3) in the battery pack inlet and outlet, and communicate the outlet (OUT1) in the first coolant inlet and outlet with the inlet (IN3) in the battery pack inlet and outlet.

8. The valve assembly apparatus according to claim 5, wherein the controller is configured to:
when the working condition of the vehicle cooling system comprises heating the battery pack assembly, control the actuator to communicate the inlet (IN2) in the second coolant inlet and outlet with the outlet (OUT3) in the battery pack inlet and outlet, and communicate the outlet (OUT2) in the second coolant inlet and outlet with the inlet (IN3) in the battery pack inlet and outlet.

9. The valve assembly apparatus according to claim 7 or 8, wherein the controller is configured to:
control the actuator to communicate the outlet (OUT3) in the battery pack inlet and outlet with the inlet (IN3) in the battery pack inlet and outlet.

10. The valve assembly apparatus according to any one of claims 1 to 11, wherein the controller is configured to:
when the working condition of the vehicle cooling system comprises cooling the powertrain, control the actuator to communicate the inlet (IN1) in the first coolant inlet and outlet with the outlet (OUT6) in the powertrain inlet and outlet, and communicate the outlet (OUT1) in the first coolant inlet and outlet with the inlet (IN4) in the powertrain inlet and outlet

11. The valve assembly apparatus according to any one of claims 1 to 9, wherein the controller is configured to:
when the working condition of the vehicle cooling system comprises cooling the powertrain, control the actuator to communicate the inlet (IN1) in the first coolant inlet and outlet with the outlet (OUT6) in the front end inlet and outlet, communicate the inlet (IN6) in the front end inlet and outlet with the outlet (OUT4) in the powertrain inlet and outlet, and communicate the inlet (IN4) in the powertrain inlet and outlet with the outlet (OUT1) in the first coolant inlet and outlet

12. A control method, applied to the valve assembly apparatus according to any one of claims 1 to 11, wherein the method comprises:
controlling, by a controller in the valve assembly apparatus based on a working condition of a vehicle cooling system, an actuator in the valve assembly apparatus to communicate at least one inlet in a first inlet and outlet set of the valve assembly apparatus with at least one outlet in a second inlet and outlet set of the valve assembly apparatus, and communicate at least one outlet in the first inlet and outlet set with at least one inlet in the second inlet and outlet set, and control the actuator to communicate the inlet (IN1) in the first coolant inlet and outlet with the outlet (OUT7) in the passenger cabin cooling inlet and outlet, and communicate the outlet (OUT1) in the first coolant inlet and outlet with the inlet (IN7) in the passenger cabin cooling inlet and outlet, comprising controlling, by the controller, the fifth terminal of the first valve assembly (2031) to communicate with the second terminal of the first valve assembly to circulate coolant through the evaporator (103), the evaporator branch pump (201), the first valve assembly, the cooling heat exchanger (2031) of the passenger cabin, and the first water tank (2038).

13. The method according to claim 12, wherein the controlling, by a controller in the valve assembly apparatus based on a working condition of a vehicle cooling system, an actuator in the valve assembly apparatus to open at least one outlet and at least one inlet in an inlet and outlet set of the valve assembly apparatus comprises:
when the working condition of the vehicle cooling system comprises cooling a passenger cabin, controlling, by the controller, the actuator to communicate an inlet (IN1) in a first coolant inlet and outlet with an outlet (OUT7) in a passenger cabin cooling inlet and outlet, and communicate an outlet (OUT1) in the first coolant inlet and outlet with an inlet (IN7) in the passenger cabin cooling inlet and outlet.

14. The method according to claim 12 or 13 wherein the controlling, by a controller in the valve assembly apparatus based on a working condition of a vehicle cooling system, an actuator in the valve assembly apparatus to open at least one outlet and at least one inlet in an inlet and outlet set of the valve assembly apparatus comprises:
when the working condition of the vehicle cooling system comprises heating the passenger cabin, controlling, by the controller, the actuator to communicate an inlet (IN2) in a second coolant inlet and outlet with an outlet (OUT5) in a passenger cabin heating inlet and outlet, and communicate an outlet (OUT2) in the second coolant inlet and outlet with an inlet (IN5) in the passenger cabin heating inlet and outlet.

15. A vehicle cooling system, comprising a heat pump subsystem (100) and the valve assembly apparatus (203) according to any one of claims 1 to 11, wherein the heat pump subsystem comprises a condenser (105) and an evaporator (103), the valve assembly apparatus is connected to a coolant outlet and a coolant inlet of the condenser, and the valve assembly apparatus is further connected to a coolant outlet and a coolant inlet of the evaporator.

16. A vehicle, comprising the vehicle cooling system according to claim 15.

## Patentansprüche

1. Ventilanordnungseinrichtung (203), die eine Steuerung, einen Aktuator, einen ersten Wassertank (2038) und einen zweiten Wassertank (2039), einen ersten Einlass- und Auslasssatz und einen zweiten Einlass- und Auslasssatz umfasst, wobei der erste Einlass- und Auslasssatz einen ersten Kühlmitteleinlass und -auslass (IN1,OUT1) und einen zweiten Kühlmitteleinlass und -auslass (IN2,OUT2) umfasst; der zweite Einlass- und Auslasssatz umfasst: einen Antriebsstrangeinlass und -auslass (IN4,OUT4), einen Fahrgastraumheizungseinlass und -auslass (IN5,OUT5) und einen Fahrgastraumkühleinlass und -auslass (IN7,OUT7) und einen Frontendeinlass und
- auslass (IN6,OUT6); und ein Einlass in dem Einlass und Auslass in jedem des ersten Einlass- und Auslasssatzes und des zweiten Einlass- und Auslasssatzes konfiguriert ist, um einen Zufluss von Kühlmittel zu ermöglichen, und ein Auslass in dem Einlass und Auslass in jedem des ersten Einlass- und Auslasssatzes und des zweiten Einlass- und Auslasssatzes konfiguriert ist, um einen Abfluss von Kühlmittel zu ermöglichen; wobei ein Einlass (IN1) in dem ersten Kühlmitteleinlass und -auslass konfiguriert ist, um über eine Verdampferzweigpumpe (201) mit einem Kühlmittelauslass eines Verdampfers (103) in einem Wärmepumpenteilsystem verbunden zu werden, und ein Auslass (OUT1) in dem ersten Kühlmitteleinlass und -auslass konfiguriert ist, um mit einem Kühlmitteleinlass des Verdampfers (103) verbunden zu werden; und ein Einlass (IN2) in dem zweiten Kühlmitteleinlass und -auslass konfiguriert ist, um mit einem Kühlmittelauslass eines Kondensators (105) in dem Wärmepumpenteilsystem verbunden zu werden, wobei der Einlass (IN1) in dem ersten Kühlmitteleinlass und
- auslass mit einem fünften Anschluss der ersten Ventilanordnung (2031) verbunden ist und der Einlass (IN2) in dem zweiten Kühlmitteleinlass und -auslass mit einem vierten Anschluss der vierten Ventilanordnung (2034) verbunden ist und ein Auslass (OUT2) in dem zweiten Kühlmitteleinlass und -auslass konfiguriert ist, um mit einem Kühlmitteleinlass des Kondensators (105) verbunden zu werden, wobei Kühlmittel durch den Verdampfer (103) und den Kondensator (105) fließt, wobei der Aktuator (203) eine erste Ventilanordnung (2031), eine zweite Ventilanordnung (2032), eine dritte Ventilanordnung (2033), eine vierte Ventilanordnung (2034) und eine fünfte Ventilanordnung (2035) umfasst;
ein Auslass (OUT4) in dem Antriebsstrangeinlass und -auslass konfiguriert ist, um mit einem Einlass eines Wärmetauschers eines Antriebsstrangs (303) verbunden zu werden, und ein Einlass (IN4) in dem Antriebsstrangeinlass und -auslass konfiguriert ist, um mit einem Auslass des Wärmetauschers des Antriebsstrangs (303) verbunden zu werden, wobei der Auslass (OUT4) in dem Antriebsstrangeinlass und -auslass mit einem vierten Anschluss der ersten Ventilanordnung (2031) und einem ersten Anschluss der fünften Ventilanordnung (2035) verbunden ist und der Einlass (IN4) in dem Antriebsstrangeinlass und -auslass mit einem ersten Anschluss der dritten Ventilanordnung (2033) verbunden ist;
ein Auslass (OUT5) in dem Fahrgastraumheizungseinlass und -auslass konfiguriert ist, um mit einem Einlass eines Heizungswärmetauschers (3022) eines Fahrgastraums verbunden zu werden, und ein Einlass (IN5) in dem Fahrgastraumheizungseinlass und
- auslass konfiguriert ist, um mit einem Auslass des Heizungswärmetauschers (3022) des Fahrgastraums verbunden zu werden, und ein Auslass (OUT7) in dem Fahrgastraumkühleinlass und -auslass konfiguriert ist, um mit einem Einlass eines Kühlwärmetauschers (3021) des Fahrgastraums verbunden zu werden, und ein Einlass (IN7) in dem Fahrgastraumkühleinlass und -auslass konfiguriert ist, um mit einem Auslass des Kühlwärmetauschers (3021) verbunden zu werden, wobei der Auslass (OUT5) in dem Fahrgastraumheizungseinlass und -auslass mit einem zweiten Anschluss der vierten Ventilanordnung (2034) verbunden ist und der Einlass (IN5) in dem Fahrgastraumheizungseinlass und -auslass mit dem zweiten Wassertank (2039) verbunden ist, wobei der Auslass (OUT7) in dem Fahrgastraumkühleinlass und - auslass mit einem zweiten Anschluss der ersten Ventilanordnung (2031) verbunden ist und der Einlass (IN7) in dem Fahrgastraumkühleinlass und -auslass mit einem ersten Wassertank (2038) verbunden ist und wobei der erste Wassertank (2038) konfiguriert ist, um Kühlmittel, das durch den Verdampfer (103) fließt, aufzubewahren, und der zweite Wassertank (2039) konfiguriert ist, um Kühlmittel, das durch den Kondensator (105) fließt, aufzubewahren;
ein Auslass (OUT6) in dem Frontendeinlass und -auslass konfiguriert ist, um mit einem Einlass eines Frontendwärmetauschers (304) verbunden zu werden, und ein Einlass (IN6) in dem Frontendeinlass und -auslass konfiguriert ist, um mit einem Auslass des Frontendwärmetauschers (304) verbunden zu werden, wobei der Auslass (OUT6) in dem Frontendeinlass und -auslass mit einem dritten Anschluss der ersten Ventilanordnung (2031), einem zweiten Anschluss der dritten Ventilanordnung (2033) und einem ersten Anschluss der vierten Ventilanordnung (2034) verbunden ist und der Einlass (IN6) in dem Frontendeinlass und -auslass mit einem zweiten Anschluss der fünften Ventilanordnung (2035) verbunden ist;
der erste Wassertank (2038) mit einem dritten Anschluss der zweiten Ventilanordnung (2032), einem dritten Anschluss der fünften Ventilanordnung (2035) und einem dritten Anschluss der dritten Ventilanordnung (2033) verbunden ist, der zweite Wassertank (2039) ferner mit einem zweiten Anschluss der zweiten Ventilanordnung (2032), dem vierten Anschluss der ersten Ventilanordnung (2031) und einem vierten Anschluss der fünften Ventilanordnung (2035) verbunden ist, ein erster Anschluss der ersten Ventilanordnung (2031) mit einem dritten Anschluss der vierten Ventilanordnung (2034) verbunden ist; und
die Steuerung konfiguriert ist, um, basierend auf einem Betriebszustand eines Fahrzeugkühlsystems, den Aktuator zu steuern, um mindestens einen Einlass in dem ersten Einlass- und Auslasssatz mit mindestens einem Auslass in dem zweiten Einlass- und Auslasssatz in Verbindung zu setzen und mindestens einen Auslass in dem ersten Einlass- und Auslasssatz mit mindestens einem Einlass in dem zweiten Einlass- und Auslasssatz in Verbindung zu setzen, und den Aktuator zu steuern, um den Einlass (IN1) in dem ersten Kühlmitteleinlass und -auslass mit dem Auslass (OUT7) in dem Fahrgastraumkühleinlass und -auslass in Verbindung zu setzen und den Auslass (OUT1) in dem ersten Kühlmitteleinlass und -auslass mit dem Einlass (IN7) in dem Fahrgastraumkühleinlass und -auslass in Verbindung zu setzen, wobei die Steuerung konfiguriert ist, um den fünften Anschluss der ersten Ventilanordnung (2031) zu steuern, um sich mit dem zweiten Anschluss der ersten Ventilanordnung (2031) in Verbindung zu setzen, um Kühlmittel durch den Verdampfer (103), die Verdampferzweigpumpe (201), die erste Ventilanordnung (2031), den Kühlwärmetauscher (3021) des Fahrgastraums und den ersten Wassertank (2038) umzuwälzen.

2. Ventilanordnungseinrichtung nach Anspruch 1, wobei die Ventilanordnungseinrichtung ferner eine Antriebsstrangumwälzpumpe (2037) umfasst und der erste Anschluss der fünften Ventilanordnung (2035) durch Verwenden der Antriebsstrangumwälzpumpe (2037) mit dem Auslass in dem Antriebsstrangeinlass und -auslass verbunden ist.

3. Ventilanordnungseinrichtung nach Anspruch 1 oder 2, wobei der zweite Einlass- und Auslasssatz ferner einen Batteriepackeinlass und -auslass (IN3,OUT3) umfasst, ein Auslass in dem Batteriepackeinlass und -auslass mit dem ersten Anschluss der ersten Ventilanordnung (2031) und dem dritten Anschluss der vierten Ventilanordnung (2034) verbunden ist und ein Einlass (IN3) in dem Batteriepackeinlass und -auslass mit einem ersten Anschluss der zweiten Ventilanordnung (2032) verbunden ist.

4. Ventilanordnungseinrichtung nach Anspruch 3, wobei die Ventilanordnungseinrichtung ferner eine Batteriepacktemperaturausgleichspumpe (2036) umfasst und der Auslass in dem Batteriepackeinlass und -auslass ferner durch Verwenden der Batteriepacktemperaturausgleichspumpe mit dem Einlass in dem Batteriepackeinlass und -auslass verbunden ist.

5. Ventilanordnungseinrichtung nach einem der Ansprüche 1 bis 2, wobei der zweite Einlass- und Auslasssatz ferner einen Batteriepackeinlass und -auslass umfasst, ein Auslass (OUT3) in dem Batteriepackeinlass und -auslass konfiguriert ist, um mit einem Einlass eines Wärmetauschers einer Batteriepackanordnung (301) verbunden zu werden, und ein Einlass (IN3) in dem Batteriepackeinlass und -auslass konfiguriert ist, um mit einem Auslass des Wärmetauschers der Batteriepackanordnung verbunden zu werden.

6. Ventilanordnungseinrichtung nach einem der Ansprüche 1 bis 5, wobei die Steuerung konfiguriert ist zum:
wenn der Betriebszustand des Fahrzeugkühlsystems ein Heizen des Fahrgastraums umfasst, Steuern des Aktuators, um den Einlass (IN2) in dem zweiten Kühlmitteleinlass und -auslass mit dem Auslass (OUT5) in dem Fahrgastraumheizungseinlass und -auslass in Verbindung zu setzen und den Auslass (OUT2) in dem zweiten Kühlmitteleinlass und -auslass mit dem Einlass (IN5) in dem Fahrgastraumheizungseinlass und -auslass in Verbindung zu setzen.

7. Ventilanordnungseinrichtung nach Anspruch 5, wobei die Steuerung konfiguriert ist zum:
wenn der Betriebszustand des Fahrzeugkühlsystems ein Kühlen der Batteriepackanordnung umfasst, Steuern des Aktuators, um den Einlass (IN1) in dem ersten Kühlmitteleinlass und -auslass mit dem Auslass (OUT3) in dem Batteriepackeinlass und -auslass in Verbindung zu setzen und den Auslass (OUT1) in dem ersten Kühlmitteleinlass und -auslass mit dem Einlass (IN3) in dem Batteriepackeinlass und -auslass in Verbindung zu setzen.

8. Ventilanordnungseinrichtung nach Anspruch 5, wobei die Steuerung konfiguriert ist zum:
wenn der Betriebszustand des Fahrzeugkühlsystems das Heizen der Batteriepackanordnung umfasst, Steuern des Aktuators, um den Einlass (IN2) in dem zweiten Kühlmitteleinlass und -auslass mit dem Auslass (OUT3) in dem Batteriepackeinlass und -auslass in Verbindung zu setzen und den Auslass (OUT2) in dem zweiten Kühlmitteleinlass und -auslass mit dem Einlass (IN3) in dem Batteriepackeinlass und -auslass in Verbindung zu setzen.

9. Ventilanordnungseinrichtung nach Anspruch 7 oder 8, wobei die Steuerung konfiguriert ist zum:
Steuern des Aktuators, um den Auslass (OUT3) in dem Batteriepackeinlass und - auslass mit dem Einlass (IN3) in dem Batteriepackeinlass und -auslass in Verbindung zu setzen.

10. Ventilanordnungseinrichtung nach einem der Ansprüche 1 bis 11, wobei die Steuerung konfiguriert ist zum:
wenn der Betriebszustand des Fahrzeugkühlsystems das Kühlen des Antriebsstrangs umfasst, Steuern des Aktuators, um den Einlass (IN1) in dem ersten Kühlmitteleinlass und -auslass mit dem Auslass (OUT6) in dem Antriebsstrangeinlass und -auslass in Verbindung zu setzen und
den Auslass (OUT1) in dem ersten Kühlmitteleinlass und -auslass mit dem Einlass (IN4) in dem Antriebsstrangeinlass und -auslass in Verbindung zu setzen.

11. Ventilanordnungseinrichtung nach einem der Ansprüche 1 bis 9, wobei die Steuerung konfiguriert ist zum:
wenn der Betriebszustand des Fahrzeugkühlsystems das Kühlen des Antriebsstrangs umfasst, Steuern des Aktuators, um den Einlass (IN1) in dem ersten Kühlmitteleinlass und -auslass mit dem Auslass (OUT6) in dem Frontendeinlass und -auslass in Verbindung zu setzen,
den Einlass (IN6) in dem Frontendeinlass und -auslass mit dem Auslass (OUT4) in dem Antriebsstrangeinlass und -auslass in Verbindung zu setzen und
den Einlass (IN4) in dem Antriebsstrangeinlass und -auslass mit dem Auslass (OUT1) in dem ersten Kühlmitteleinlass und -auslass in Verbindung zu setzen.

12. Steuerverfahren, das auf die Ventilanordnungseinrichtung nach einem der Ansprüche 1 bis 11 angewendet wird, wobei das Verfahren umfasst:
Steuern, durch eine Steuerung basierend auf einem Betriebszustand eines Fahrzeugkühlsystems, eines Aktuators in der Ventilanordnungseinrichtung, um mindestens einen Einlass in einem ersten Einlass- und Auslasssatz der Ventilanordnungseinrichtung mit mindestens einem Auslass in einem zweiten Einlass- und Auslasssatz der Ventilanordnungseinrichtung in Verbindung zu setzen und mindestens einen Auslass in dem ersten Einlass- und Auslasssatz mit mindestens einem Einlass in dem zweiten Einlass- und Auslasssatz in Verbindung zu setzen und den Aktuator zu steuern, um den Einlass (IN1) in dem ersten Kühlmitteleinlass und - auslass mit dem Auslass (OUT7) in dem Fahrgastraumkühleinlass und -auslass in Verbindung zu setzen und den Auslass (OUT1) in dem ersten Kühlmitteleinlass und - auslass mit dem Einlass (IN7) in dem Fahrgastraumkühleinlass und -auslass in Verbindung zu setzen, das das Steuern, durch die Steuerung, des fünften Anschlusses der ersten Ventilanordnung (2031) umfasst, um sich mit dem zweiten Anschluss der ersten Ventilanordnung in Verbindung zu setzen, um Kühlmittel durch den Verdampfer (103), die Verdampferzweigpumpe (201), die erste Ventilanordnung, den Kühlwärmetauscher (2031) des Fahrgastraums und den ersten Wassertank (2038) umzuwälzen.

13. Verfahren nach Anspruch 12, wobei das Steuern, durch eine Steuerung in der Ventilanordnungseinrichtung basierend auf einem Betriebszustand eines Fahrzeugkühlsystems, eines Aktuators in der Ventilanordnungseinrichtung, um mindestens einen Auslass und mindestens einen Einlass in einem Einlass- und Auslasssatz der Ventilanordnungseinrichtung zu öffnen, umfasst:
wenn der Betriebszustand des Fahrzeugkühlsystems das Kühlen eines Fahrgastraums umfasst, Steuern, durch die Steuerung, des Aktuators, um einen Einlass (IN1) in einem ersten Kühlmitteleinlass und -auslass mit einem Auslass (OUT7) in einem Fahrgastraumkühleinlass und -auslass in Verbindung zu setzen und einen Auslass (OUT1) in dem ersten Kühlmitteleinlass und -auslass mit einem Einlass (IN7) in dem Fahrgastraumkühleinlass und -auslass in Verbindung zu setzen.

14. Verfahren nach Anspruch 12 oder 13, wobei das Steuern, durch eine Steuerung in der Ventilanordnungseinrichtung basierend auf einem Betriebszustand eines Fahrzeugkühlsystems, eines Aktuators in der Ventilanordnungseinrichtung, um mindestens einen Auslass und mindestens einen Einlass in einem Einlass- und Auslasssatz der Ventilanordnungseinrichtung zu öffnen, umfasst:
wenn der Betriebszustand des Fahrzeugkühlsystems das Heizen des Fahrgastraums umfasst, Steuern, durch die Steuerung, des Aktuators, um einen Einlass (IN2) in einem zweiten Kühlmitteleinlass und -auslass mit einem Auslass (OUT5) in einem Fahrgastraumheizungseinlass und -auslass in Verbindung zu setzen und einen Auslass (OUT2) in dem zweiten Kühlmitteleinlass und -auslass mit einem Einlass (IN5) in dem Fahrgastraumheizungseinlass und -auslass in Verbindung zu setzen.

15. Fahrzeugkühlsystem, das ein Wärmepumpenteilsystem (100) und die Ventilanordnungseinrichtung (203) nach einem der Ansprüche 1 bis 11 umfasst, wobei das Wärmepumpenteilsystem einen Kondensator (105) und einen Verdampfer (103) umfasst, die Ventilanordnungseinrichtung mit einem Kühlmittelauslass und einem Kühlmitteleinlass des Kondensators verbunden ist und die Ventilanordnungseinrichtung ferner mit einem Kühlmittelauslass und einem Kühlmitteleinlass des Verdampfers verbunden ist.

16. Fahrzeug, das das Fahrzeugkühlsystem nach Anspruch 15 umfasst.

## Revendications

1. Appareil d'assemblage soupape (203), comprenant un dispositif de commande, un actionneur, un premier réservoir d'eau (2038) et un second réservoir d'eau (2039), un premier ensemble d'entrée et de sortie, et un second ensemble d'entrée et de sortie, dans lequel le premier ensemble d'entrée et de sortie comprend une première entrée et sortie de liquide de refroidissement (IN1, OUT1) et une seconde entrée et sortie de liquide de refroidissement (IN2, OUT2) ; le second ensemble d'entrée et de sortie comprend : une entrée et sortie de groupe motopropulseur (IN4,OUT4), une entrée et sortie de chauffage d'habitacle (IN5,OUT5) et une entrée et sortie de refroidissement d'habitacle (IN7,OUT7), et une entrée et sortie d'extrémité avant (IN6,OUT6) ; et une entrée dans l'entrée et sortie dans chacun du premier ensemble d'entrée et de sortie et du second ensemble d'entrée et de sortie est conçue pour permettre un écoulement entrant de liquide de refroidissement, et une sortie dans l'ensemble d'entrée et de sortie dans chacun du premier ensemble d'entrée et de sortie et du second ensemble d'entrée et de sortie est conçue pour permettre un écoulement sortant de liquide de refroidissement ;
une entrée (IN1) dans la première entrée et sortie de liquide de refroidissement est conçue pour être raccordée à une sortie de liquide de refroidissement d'un évaporateur (103) dans un sous-système de pompe à chaleur par l'intermédiaire d'une pompe de dérivation d'évaporateur (201), et une sortie (OUT1) dans la première entrée et sortie de liquide de refroidissement est conçue pour être raccordée à une entrée de liquide de refroidissement de l'évaporateur (103) ; et une entrée (IN2) dans la seconde entrée et sortie de liquide de refroidissement est conçue pour être raccordée à une sortie de liquide de refroidissement d'un condenseur (105) dans le sous-système de pompe à chaleur, dans lequel l'entrée (IN1) dans la première entrée et sortie de liquide de refroidissement est connectée à une cinquième borne du premier assemblage soupape (2031), et l'entrée (IN2) dans la seconde entrée et sortie de liquide de refroidissement est connectée à une quatrième borne du quatrième assemblage soupape (2034), et une sortie (OUT2) dans la seconde entrée et sortie de liquide de refroidissement est conçue pour être raccordée à une entrée de liquide de refroidissement du condenseur (105), dans lequel le liquide de refroidissement circule à travers l'évaporateur (103) et le condenseur (105), dans lequel l'actionneur (203) comprend un premier assemblage soupape (2031), un deuxième assemblage soupape (2032), un troisième assemblage soupape (2033), un quatrième assemblage soupape (2034), et un cinquième assemblage soupape (2035) ;
une sortie (OUT4) dans l'entrée et sortie de groupe motopropulseur est conçue pour être raccordée à une entrée d'un échangeur de chaleur d'un groupe motopropulseur (303), et une entrée (IN4) dans l'entrée et sortie de groupe motopropulseur est conçue pour être raccordée à une sortie de l'échangeur de chaleur du groupe motopropulseur (303), dans lequel la sortie (OUT4) dans l'entrée et sortie de groupe motopropulseur est connectée à une quatrième borne du premier assemblage soupape (2031) et à une première borne du cinquième assemblage soupape (2035), et l'entrée (IN4) dans l'entrée et sortie de groupe motopropulseur est connectée à une première borne du troisième assemblage soupape (2033) ;
une sortie (OUT5) dans l'entrée et sortie de chauffage d'habitacle est conçue pour être raccordée à une entrée d'un échangeur de chaleur de chauffage (3022) d'un habitacle, et une entrée (IN5) dans l'entrée et sortie de chauffage d'habitacle est conçue pour être raccordée à une sortie de l'échangeur de chaleur de chauffage (3022) de l'habitacle, et une sortie (OUT7) dans l'entrée et sortie de refroidissement d'habitacle est conçue pour être raccordée à une entrée d'un échangeur de chaleur de refroidissement (3021) de l'habitacle, et une entrée (IN7) dans l'entrée et sortie de refroidissement d'habitacle est conçue pour être raccordée à une sortie de l'échangeur de chaleur de refroidissement (3021), dans lequel la sortie (OUT5) dans l'entrée et sortie de chauffage d'habitacle est connectée à une deuxième borne du quatrième assemblage soupape (2034), et l'entrée (IN5) dans l'entrée et sortie de chauffage d'habitacle est raccordée au second réservoir d'eau (2039), dans lequel la sortie (OUT7) dans l'entrée et sortie de refroidissement d'habitacle est connectée à une deuxième borne du premier assemblage soupape (2031), et l'entrée (IN7) dans l'entrée et sortie de refroidissement d'habitacle est raccordée à un premier réservoir d'eau (2038), et dans lequel le premier réservoir d'eau (2038) est conçu pour stocker un liquide de refroidissement qui circule à travers l'évaporateur (103), et le second réservoir d'eau (2039) est conçu pour stocker un liquide de refroidissement qui circule à travers le condenseur (105) ;
une sortie (OUT6) dans l'entrée et sortie d'extrémité avant est conçue pour être raccordée à une entrée d'un échangeur de chaleur d'extrémité avant (304), et une entrée (IN6) dans l'entrée et sortie d'extrémité avant est conçue pour être raccordée à une sortie de l'échangeur de chaleur d'extrémité avant (304), dans lequel la sortie (OUT6) dans l'entrée et sortie d'extrémité avant est connectée à une troisième borne du premier assemblage soupape (2031), à une deuxième borne du troisième assemblage soupape (2033), et à une première borne du quatrième assemblage soupape (2034), et l'entrée (IN6) dans l'entrée et sortie d'extrémité avant est connectée à une deuxième borne du cinquième assemblage soupape (2035) ;
le premier réservoir d'eau (2038) est connecté à une troisième borne du deuxième assemblage soupape (2032), à une troisième borne du cinquième assemblage soupape (2035) et à une troisième borne du troisième assemblage soupape (2033), le second réservoir d'eau (2039) est en outre connecté à une deuxième borne du deuxième assemblage soupape (2032), à la quatrième borne du premier assemblage soupape (2031), et à une quatrième borne du cinquième assemblage soupape (2035), une première borne du premier assemblage soupape (2031) est connectée à une troisième borne du quatrième assemblage soupape (2034) ; et
le dispositif de commande est configuré pour commander, sur la base d'un état de fonctionnement d'un système de refroidissement de véhicule, l'actionneur pour faire communiquer au moins une entrée dans le premier ensemble d'entrée et de sortie avec au moins une sortie dans le second ensemble d'entrée et de sortie, et faire communiquer au moins une sortie dans le premier ensemble d'entrée et de sortie avec au moins une entrée dans le second ensemble d'entrée et de sortie, et commander l'actionneur pour faire communiquer l'entrée (IN1) dans la première entrée et sortie de liquide de refroidissement avec la sortie (OUT7) dans l'entrée et sortie de refroidissement d'habitacle, et de faire communiquer la sortie (OUT1) dans la première entrée et sortie de liquide de refroidissement avec l'entrée (IN7) dans l'entrée et sortie de refroidissement d'habitacle, dans lequel le dispositif de commande est configuré pour commander la cinquième borne du premier assemblage soupape (2031) pour communiquer avec la deuxième borne du premier assemblage soupape (2031) pour faire circuler un liquide de refroidissement à travers l'évaporateur (103), la pompe de dérivation d'évaporateur (201), le premier assemblage soupape (2031), l'échangeur de chaleur de refroidissement (3021) de l'habitacle et le premier réservoir d'eau (2038).

2. Appareil d'assemblage soupape selon la revendication 1, dans lequel l'appareil d'assemblage soupape comprend en outre une pompe de circulation de groupe motopropulseur (2037), et la première borne du cinquième assemblage soupape (2035) est connectée à la sortie dans l'entrée et sortie de groupe motopropulseur en utilisant la pompe de circulation de groupe motopropulseur (2037).

3. Appareil d'assemblage soupape selon la revendication 1 ou 2, dans lequel le second ensemble d'entrée et de sortie comprend en outre une entrée et sortie de bloc-batterie (IN3, OUT3) ;
une sortie dans l'entrée et sortie de bloc-batterie est connectée à la première borne du premier assemblage soupape (2031) et à la troisième borne du quatrième assemblage soupape (2034), et une entrée (IN3) dans l'entrée et sortie de bloc-batterie est connectée à une première borne du deuxième assemblage soupape (2032).

4. Appareil d'assemblage soupape selon la revendication 3, dans lequel l'appareil d'assemblage soupape comprend en outre une pompe de compensation de température de bloc-batterie (2036),
et la sortie dans l'entrée et sortie de bloc-batterie est en outre connectée à l'entrée dans l'entrée et sortie de bloc-batterie en utilisant la pompe de compensation de température de bloc-batterie.

5. Appareil d'assemblage soupape selon l'une quelconque des revendications 1 à 2, dans lequel le second ensemble d'entrée et de sortie comprend en outre une entrée et sortie de bloc-batterie, une sortie (OUT3) dans l'entrée et sortie de bloc-batterie est configurée pour être connectée à une entrée d'un échangeur de chaleur d'un ensemble bloc-batterie (301), et une entrée (IN3) dans l'entrée et sortie de bloc-batterie est configurée pour être connectée à une sortie de l'échangeur de chaleur de l'ensemble bloc-batterie.

6. Appareil d'assemblage soupape selon l'une quelconque des revendications 1 à 5, dans lequel le dispositif de commande est configuré pour :
lorsque l'état de fonctionnement du système de refroidissement de véhicule comprend le chauffage de l'habitacle, commander l'actionneur pour faire communiquer l'entrée (IN2) dans la seconde entrée et sortie de liquide de refroidissement avec la sortie (OUT5) dans l'entrée et sortie de chauffage d'habitacle, et faire communiquer la sortie (OUT2) dans la seconde entrée et sortie de liquide de refroidissement avec l'entrée (IN5) dans l'entrée et sortie de chauffage d'habitacle.

7. Appareil d'assemblage soupape selon la revendication 5, dans lequel le dispositif de commande est configuré pour :
lorsque l'état de fonctionnement du système de refroidissement de véhicule comprend le refroidissement de l'ensemble bloc-batterie, commander l'actionneur pour faire communiquer l'entrée (IN1) dans la première entrée et sortie de liquide de refroidissement avec la sortie (OUT3) dans l'entrée et sortie de bloc-batterie, et faire communiquer la sortie (OUT1) dans la première entrée et sortie de liquide de refroidissement avec l'entrée (IN3) dans l'entrée et sortie de bloc-batterie.

8. Appareil d'assemblage soupape selon la revendication 5, dans lequel le dispositif de commande est configuré pour :
lorsque l'état de fonctionnement du système de refroidissement de véhicule comprend le chauffage de l'ensemble bloc-batterie, commander l'actionneur pour faire communiquer l'entrée (IN2) dans la seconde entrée et sortie de liquide de refroidissement avec la sortie (OUT3) dans l'entrée et sortie de bloc-batterie, et faire communiquer la sortie (OUT2) dans la seconde entrée et sortie de liquide de refroidissement avec l'entrée (IN3) dans l'entrée et sortie de bloc-batterie.

9. Appareil d'assemblage soupape selon la revendication 7 ou 8, dans lequel le dispositif de commande est configuré pour :
commander l'actionneur pour faire communiquer la sortie (OUT3) dans l'entrée et sortie de bloc-batterie avec l'entrée (IN3) dans l'entrée et sortie de bloc-batterie.

10. Appareil d'assemblage soupape selon l'une quelconque des revendications 1 à 11, dans lequel le dispositif de commande est configuré pour :
lorsque l'état de fonctionnement du système de refroidissement de véhicule comprend le refroidissement du groupe motopropulseur, commander l'actionneur pour faire communiquer l'entrée (IN1) dans la première entrée et sortie de liquide de refroidissement avec la sortie (OUT6) dans l'entrée et sortie de groupe motopropulseur, et
faire communiquer la sortie (OUT1) dans la première entrée et sortie de liquide de refroidissement avec l'entrée (IN4) dans l'entrée et sortie de groupe motopropulseur

11. Appareil d'assemblage soupape selon l'une quelconque des revendications 1 à 9, dans lequel le dispositif de commande est configuré pour :
lorsque l'état de fonctionnement du système de refroidissement de véhicule comprend le refroidissement du groupe motopropulseur, commander l'actionneur pour faire communiquer l'entrée (IN1) dans la première entrée et sortie de liquide de refroidissement avec la sortie (OUT6) dans l'entrée et sortie d'extrémité avant,
faire communiquer l'entrée (IN6) dans l'entrée et sortie d'extrémité avant avec la sortie (OUT4) dans l'entrée et sortie de groupe motopropulseur, et
faire communiquer l'entrée (IN4) dans l'entrée et sortie de groupe motopropulseur avec la sortie (OUT1) dans la première entrée et sortie de liquide de refroidissement.

12. Procédé de commande, appliqué à un appareil d'assemblage soupape selon l'une quelconque des revendications 1 à 11, dans lequel le procédé comprend :
la commande, par un dispositif de commande dans l'appareil d'assemblage soupape, sur la base d'un état de fonctionnement d'un système de refroidissement de véhicule, d'un actionneur dans l'appareil d'assemblage soupape pour faire communiquer au moins une entrée dans un premier ensemble d'entrée et de sortie de l'appareil d'assemblage soupape avec au moins une sortie dans un second ensemble d'entrée et de sortie de l'appareil d'assemblage soupape, et faire communiquer au moins une sortie dans le premier ensemble d'entrée et de sortie avec au moins une entrée dans le second ensemble d'entrée et de sortie, et commander l'actionneur pour faire communiquer l'entrée (IN1) dans la première entrée et sortie de liquide de refroidissement avec la sortie (OUT7) dans l'entrée et sortie de refroidissement d'habitacle, et faire communiquer la sortie (OUT1) dans la première entrée et sortie de liquide de refroidissement avec l'entrée (IN7) dans l'entrée et sortie de refroidissement d'habitacle, comprenant la commande, par le dispositif de commande, de la cinquième borne du premier assemblage soupape (2031) pour communiquer avec la deuxième borne du premier assemblage soupape afin de faire circuler un liquide de refroidissement à travers l'évaporateur (103), la pompe de dérivation d'évaporateur (201), le premier assemblage soupape, l'échangeur de chaleur de refroidissement (2031) de l'habitacle et le premier réservoir d'eau (2038).

13. Procédé selon la revendication 12, dans lequel la commande, par un dispositif de commande dans l'appareil d'assemblage soupape, sur la base d'un état de fonctionnement d'un système de refroidissement de véhicule, d'un actionneur dans l'appareil d'assemblage soupape pour ouvrir au moins une sortie et au moins une entrée dans un ensemble d'entrée et de sortie de l'appareil d'assemblage soupape comprend :
lorsque l'état de fonctionnement du système de refroidissement de véhicule comprend le refroidissement d'un habitacle, la commande, par le dispositif de commande, de l'actionneur pour faire communiquer une entrée (IN1) dans une première entrée et sortie de liquide de refroidissement avec une sortie (OUT7) dans une entrée et sortie de refroidissement d'habitacle, et faire communiquer une sortie (OUT1) dans la première entrée et sortie de liquide de refroidissement avec une entrée (IN7) dans l'entrée et sortie de refroidissement d'habitacle.

14. Procédé selon la revendication 12 ou 13, dans lequel la commande, par un dispositif de commande dans l'appareil d'assemblage soupape, sur la base d'un état de fonctionnement du système de refroidissement de véhicule, d'un actionneur dans l'appareil d'assemblage soupape pour ouvrir au moins une sortie et au moins une entrée dans un ensemble d'entrée et de sortie de l'appareil d'assemblage soupape comprend :
lorsque l'état de fonctionnement du système de refroidissement de véhicule comprend le chauffage de l'habitacle, la commande, par le dispositif de commande, de l'actionneur pour faire communiquer une entrée (IN2) dans une seconde entrée et sortie de liquide de refroidissement avec une sortie (OUT5) dans une entrée et sortie de chauffage d'habitacle, et faire communiquer une sortie (OUT2) dans la seconde entrée et sortie de liquide de refroidissement avec une entrée (IN5) dans l'entrée et sortie de chauffage d'habitacle.

15. Système de refroidissement de véhicule, comprenant un sous-système de pompe à chaleur (100) et l'appareil d'assemblage soupape (203) selon l'une quelconque des revendications 1 à 11, dans lequel le sous-système de pompe à chaleur comprend un condenseur (105) et un évaporateur (103), l'appareil d'assemblage soupape est connecté à une sortie de liquide de refroidissement et à une entrée de liquide de refroidissement du condenseur, et l'appareil d'assemblage soupape est en outre connecté à une sortie de liquide de refroidissement et à une entrée de liquide de refroidissement de l'évaporateur.

16. Véhicule, comprenant le système de refroidissement de véhicule selon la revendication 15.
